# EUROPEAN PATENT APPLICATION

(11) **EP 4 782 272 A1**
(43) Date of publication of application: **29.07.2026**
(21) Application number: 24868833.5
(22) Date of filing: 20.09.2024
(51) Int. Cl.: B60N 2/28, A01K 1/02

(54) **BOX FIXING STRUCTURE AND CARRIER DEVICE**

(30) Priority: 22.09.2023 US 202363584528 P; 27.09.2023 US 202363585699 P; 20.10.2023 US 202363591861 P; 12.09.2024 CN 202411281027
(71) Applicant: Jani International Pte. Ltd., Singapore 569874 (SG)
(72) Inventor: CHENG, Chinming, Taipei 114 Taipei (CN); LIN, Lihung, Taipei 114 Taipei (CN)
(74) Representative: Müller-Boré & Partner Patentanwälte PartG mbB
(86) International application number: PCT/SG2024/050601
(87) International publication number: WO 2025/063894

(57) **Abstract**

The invention relates to a box fixing structure and a carrier device. The box fixing structure comprises: a box; a restraint strap passing through the box, the restraint strap comprising an adjustment end and at least one connection end, wherein the adjustment end and the at least one connection end extend from a rear side plate of the box to the outside of the box, there is a preset height between the position where the at least one connection end leaves the rear side plate and a bottom plate of the box, and an anchor for connection to a vehicle seat is provided on the at least one connection end; and an adjuster attached to the box, wherein the adjustment end passes through the adjuster and can be locked by the adjuster to adjust the length of the restraint strap between the anchor and the adjuster.

## Description

### TECHNICAL FIELD

The present application relates to a box fixing structure and a carrier device.

### BACKGROUND

When a user travels by a transport such as a vehicle, an accompanied box may be placed on a seat of the vehicle. When the transport brakes in an emergency due to an unexpected situation, the box is easily slid off from the seat by inertia. Some boxes are connected to the seat of the vehicle by a LATCH (Lower Anchors and Tethers for Children) connector or an ISOFIX (International Standards Organization FIX) connector provided on a flexible webbing. The boxes are prone to bouncing when the vehicle collides.

In addition, the box such as a pet box provides convenience for people to carry pets to go out. The pet box is usually rested directly on a vehicle seat, and is prone to falling off from the vehicle seat when the vehicle brakes in an emergency due to an unexpected situation.

### SUMMARY

In view of this, to address the above drawbacks, the present application provides a box fixing structure and a carrier device, which can effectively prevent a pet cage from slipping forward or even falling off with respect to the vehicle seat when the vehicle brakes in an emergency due to an unexpected situation and allows the box to be stably supported on the vehicle seat.

In an aspect of the present application, a box fixing structure adapted to be connected to a vehicle seat is provided, which includes a box and a restraining strap. The box has a bottom plate and a rear side plate connected to the bottom plate. The restraining strap is attached to the rear side plate of the box. The restraining strap includes at least one connecting end configured to be connected to an anchor of the vehicle seat. The anchor is adapted to be detachably connected to a socket provided between a seating part and a backrest part of the seat. There is a predetermined interval between a position where the restraining strap extends out from the rear side plate and the bottom plate.

Optionally, the rear side plate of the box is provided with a guiding structure configured to define a height where the at least one connecting end extends out. The at least one connecting end protrudes toward an outside of the box through the guiding structure, such that when the anchor is engaged with the socket, the at least one connecting end extends rearwardly and downwardly from the rear side plate.

Optionally, the box fixing structure further includes an adjuster. The adjuster is attached to the box or the restraining strap and configured to adjust a length of the at least one connecting end extending out from the rear side plate. The guiding structure includes a rigid member provided on the rear side plate of the box. The rigid member has a supporting part higher than the bottom plate of the box. The at least one connecting end curves around the supporting part and then protrudes toward the outside of the box. The at least one connecting end leaves from the box at a position higher than one half of a height of the box.

In another aspect of the present application, a box fixing structure is provided, which includes a carrier, a restraining strap, and an adjuster. The restraining strap is attached to the box. The restraining strap includes an adjusting end and at least one connecting end. The at least one connecting end is positioned outside the box and provided with an anchor. The adjuster is attached to the box or the restraining strap. When the anchor of the at least one connecting end is fixed, a relative position between the adjuster and the restraining strap is adjusted by the adjustor to tension a portion of the restraining strap located between the adjuster and the anchor.

Optionally, the restraining strap includes two connecting ends. The two connecting ends are provided with two anchors. The two anchors are adapted to be detachably connected to two sockets provided between the seating part and the backrest part of the seat, respectively.

Optionally, the adjuster is mounted onto the box, and the restraining strap passes through the adjuster and can be locked by the adjuster.

Optionally, the at least one connecting end of the restraining strap extends rearwardly along a bottom part of the box to the rear side plate, then extends upwardly along the rear side plate, and then extends from a predetermined height of the rear side plate toward the outside of the box.

Optionally, the rear side plate of the box is provided with a rigid member. The rigid member has a supporting part higher than a bottom plate of the box. The at least one connecting end of the restraining strap curves around the supporting part and then protrudes toward the outside of the box.

Optionally, the rigid member has a hollow first channel. The at least one connecting end of the restraining strap passes through the first channel.

Optionally, the restraining strap includes two connecting ends. The two connecting ends extend from a front side plate of the box toward a left side plate and a right side plate of the box, respectively, then extend rearwardly along the left side plate and the right side plate, respectively, and extend from a predetermined height of the box toward the outside of the box.

Optionally, the at least one connecting end of the restraining strap extends from a top plate of the box toward a rear lower portion of a rear side plate of the box.

Optionally, the restraining strap forms an annular structure. The box is restrained in the annular structure. The anchor is proximate to a bottom part of the box.

Optionally, the adjuster includes a stopper. The stopper is position-adjustably attached to the restraining strap. When the anchor is fixed, the stopper can abut against the box to tension a portion of the restraining strap located between the stopper and the anchor.

Optionally, the at least one connecting end leaves from the box at a position higher than the bottom plate of the box.

Optionally, the at least one connecting end leaves from the box at a position higher than one half of a height of the box.

In another aspect of the present application, a box fixing structure is provided, which includes: a box; a restraining strap attached to the box, wherein the restraining strap includes at least one connecting end, and the at least one connecting end is positioned outside the box and provided with an anchor; and an adjuster position-adjustably connected to the restraining strap and configured to adjust a length of the restraining strap located between the adjuster and the anchor.

Optionally, the restraining strap further includes an adjusting end. The adjuster is positioned between the adjusting end and the at least one connecting end, and the restraining strap can be locked by the adjuster.

Optionally, the adjuster is mounted to the box.

In yet another aspect of the present application, a carrier device is provided, which includes a body and at least one connecting member. The body has a carrying space. The at least one connecting member is configured to be connected to at least one connecting point of a vehicle seat. The at least one connecting member is pivotably connected to a bottom part of the body to be movable between a use position and a stowed position. The bottom part of the body is provided with at least one receiving space. When the at least one connecting member is in the stowed position, the at least one connecting member is received in the at least one receiving space. When the at least one connecting member is separately horizontally rotated in a common direction, the at least one connecting member rotates from the stowed position to the use position; or when the at least one connecting member is separately horizontally rotated in opposing directions, the at least one connecting member rotates from the stowed position to the use position; or when the least one connecting member is separately vertically rotated from top to bottom, the least one connecting member rotates from the stowed position to the use position.

Optionally, the carrier device further includes a spring configured to drive the at least one connecting member to rotate from the stowed position to the use position.

In yet another aspect of the present application, a carrier device is provided as a box fixing structure. The carrier device includes: a body having a carrying space; a LATCH structure provided on a bottom part of the body and including at least one connecting member configured to be connected to at least one connecting point of a vehicle seat; wherein the at least one connecting member is pivotably connected to the bottom part of the body to be movable between a use position and a stowed position.

Optionally, the bottom part of the body is provided with at least one receiving space, and when the at least one connecting member is in the stowed position, the at least one connecting member is received in the at least one receiving space.

In yet another aspect of the present application, a carrier device is provided as a box fixing structure. The carrier device includes: a body having a carrying space, wherein a rod is provided on a bottom part of the body; a connecting base provided with an engaging structure, the engaging structure being detachably engaged with the rod; a LATCH structure provided on the connecting base and including at least one connecting member configured to be connected to at least one connecting point of a vehicle seat.

In yet another aspect of the present application, a carrier device is provided as a box fixing structure. The carrier device includes: a body having a carrying space; a LATCH structure including at least one connecting member and at least one webbing, wherein the at least one connecting member is connected to the body by the at least one webbing, and the at least one connecting member is configured to be connected to at least one connecting point of a vehicle seat.

Optionally, a rear surface of the body is provided with at least two vertically extending rails. The carrier device further includes a rod slidably engaged with the rails. A first end of the webbing is connected to the rod, and a second end of the webbing passes by the bottom part of the body and extends forwardly; the connecting member is slidably fitted onto the webbing.

Optionally, a rear surface of the body is provided with at least one guiding structure and at least one locking mechanism. The at least one guiding structure is positioned above the at least one locking mechanism. The webbing passes through the guiding structure and the locking mechanism. The connecting member is proximate to the locking mechanism.

Optionally, a rear surface of the body is provided with at least one vertically extending extension which is a hollow channel or a semi-open channel. The webbing passes through the extension. The connecting member has a use position in which the connecting member extends out from the extension and a stowed position in which the connecting member is received in the extension.

Optionally, the webbing includes a first webbing segment and a second webbing segment. The first webbing segment and the second webbing segment are detachably connected by a buckle to form an annular structure nestable on the body.

Optionally, a rear surface of the body is provided with a chute or a rail. The chute or the rail extends in a horizontal direction; the webbing is provided with a first buckle, the chute or rail is provided with a second buckle, and the first buckle is detachably connected to the second buckle.

Optionally, a rear surface, a left side plate, and a right side plate of the body are each provided with a second buckle. The webbing is provided with a first buckle detachably connected to each second buckle.

In yet another aspect of the present application, a carrier device is provided. The carrier device includes a body, at least one connecting member, and at least one webbing. The body has a carrying space. The at least one connecting member is configured to connect to at least one connecting point of a vehicle seat. Each of the at least one webbing includes a first webbing segment and a second webbing segment. The first webbing segment and the second webbing segment are detachably connected to form an annular structure nestable on the body. The at least one connecting member is connected to the body by the at least one webbing.

Optionally, one end of the first webbing segment is position-adjustably connected to the second webbing segment by an adjuster. One end of the second webbing segment is connected to the connecting member. Another end of the first webbing segment and another end of the second webbing segment are detachably connected by a buckle mechanism.

Optionally, the buckle mechanism is a magnetic buckle mechanism including a male buckle and a female buckle. The male buckle is connected to one of the first webbing segment and the second webbing segment, and the female buckle is connected to the other of the first webbing segment and the second webbing segment.

Optionally, the adjuster is positioned between the rear surface of the body and the connecting member.

In yet another aspect of the present application, a carrier device is provided. The carrier device includes a body, at least one connecting member, and at least one buckle mechanism. The body has a carrying space. The at least one connecting member is configured to be connected to at least one connecting point of a vehicle seat. The buckle mechanism includes a male buckle provided on the connecting member and a female buckle provided on an outer side surface of the body. When the carrier device is in a use state, the at least one connecting member is connected to the body by the at least one buckle mechanism. The outer side surface of the body is provided with a chute or rail, and the female buckle is slidable along the chute or rail to adjust the relative position between the female buckle and the outer side surface of the body.

Optionally, the male buckle is provided with an outwardly protruding structure. The female buckle includes a cavity configured to engage with the outwardly protruding structure of the male buckle. The outwardly protruding structure is provided with a groove. The female buckle includes a locking mechanism which can be engaged with the groove in the cavity. The female buckle is further provided with a releasing band operably connected to the locking mechanism, and when the releasing band is pulled, the male buckle is separated from the female buckle.

Optionally, the locking mechanism includes a magnetic device. The male buckle is provided with a magnetic device. The male buckle and the female buckle are engaged with and locked to each other by a mutual attraction between the magnetic devices of the male buckle and the locking mechanism.

Optionally, the carrier device further includes a magnetic buckle adjusting mechanism. The magnetic buckle adjusting mechanism includes an adjusting mechanism and a male buckle and a female buckle which are connected by the adjusting mechanism.

Optionally, the carrier device includes two female buckles. The two female buckles are disposed in parallel and opposite to each other on an outer side surface of the body, and away from a bottom surface of the body. The two female buckles are slidable along the chute or rail to adjust the relative position therebetween.

Optionally, the carrier device further includes at least one webbing. One or more female buckles are provided on each of the rear surface, the left side surface, and the right side surface of the body. The connecting member is fitted onto the webbing and is further provided with two or more male buckles connected to the female buckles on the rear surface and the left side surface or the right side surface of the body, respectively.

Optionally, the carrier device further includes at least one webbing, and at least one locking mechanism is provided on a side surface of the body. The at least one webbing passes through the corresponding locking mechanism and is connected to the corresponding connecting member. The at least one connecting member is connected to the body by the at least one webbing.

Optionally, the carrier device further includes at least one webbing and at least one adjuster. The adjuster is attached to the body, and the webbing passes through the adjuster and can be locked by the adjuster, allowing a length of the webbing between the connecting point and the adjuster to be adjusted.

### BRIEF DESCRIPTION OF THE DRAWINGS

The accompanying drawings, which form a part of the present application, serve to provide a further understanding of the present application, and the illustrative embodiments of the present application and the description thereof serve to explain the present application, and are not to be construed as unduly limiting the present application.
FIG. 1 is a perspective view illustrating a box fixing structure according to a first embodiment of the present application.
FIG. 2 is a perspective view illustrating the box fixing structure being mounted on a seat according to the first embodiment of the present application.
FIG. 3 is a sectional view illustrating an adjuster according to the first embodiment of the present application.
FIG. 4 illustrates a variant of the box fixing structure according to the first embodiment of the present application.
FIG. 5 illustrates another variant of the box fixing structure according to the first embodiment of the present application.
FIG. 6 illustrates yet another variant of the box fixing structure according to the first embodiment of the present application.
FIG. 7 illustrates yet another variant of the box fixing structure according to the first embodiment of the present application.
FIG. 8 is a perspective view illustrating a box fixing structure according to a second embodiment of the present application.
FIG. 9 illustrates a variant of the box fixing structure according to the second embodiment of the present application.
FIG. 10 illustrates another variant of the box fixing structure according to the second embodiment of the present application.
FIG. 11 is a perspective view illustrating a box fixing structure according to a third embodiment of the present application.
FIG. 12 is a perspective view illustrating a box fixing structure according to a fourth embodiment of the present application.
FIGS. 13 and 14 schematically illustrate perspective views from different perspectives of a carrier device according to a fifth embodiment of the present application, with a Latch structure in a use state.
FIG. 15 schematically illustrates a perspective view of the carrier device according to the fifth embodiment of the present application, with the Latch structure in a non-use state (alternatively referred to as a stowed state).
FIGS. 16 and 17 schematically illustrate perspective views from different perspectives of a carrier device according to a sixth embodiment of the present application.
FIGS. 18 to 21 schematically illustrate perspective views from different perspectives of a carrier device according to a seventh embodiment of the present application, with the Latch structure in FIGS. 18 and 19 in a use state and the Latch structure in FIG. 20 in a non-use state (alternatively referred to as a stowed state).
FIGS. 22 to 25 schematically illustrate perspective views from different perspectives of a carrier device according to an eighth embodiment of the present application, wherein FIG. 23 illustrates a perspective view of the carrier device placed on a vehicle seat.
FIGS. 26 to 28 schematically illustrate perspective views from different perspectives of a carrier device according to a ninth embodiment of the present application.
FIGS. 29 and 30 schematically illustrate perspective views of a carrier device according to a tenth embodiment of the present application, with the Latch structure in FIG. 29 in a use state and the Latch structure in FIG. 30 in a non-use state (alternatively referred to as a stowed state).
FIG. 31 schematically illustrates a rear view of the carrier device shown in FIG. 30.
FIG. 32 schematically illustrates another perspective view of the carrier device according to the tenth embodiment of the present application.
FIGS. 33 to 35 schematically illustrate perspective views from different perspectives of a carrier device according to an eleventh embodiment of the present application, with male and female buckles of a magnetic buckle mechanism in FIG. 34 connected to each other, and the male and female buckles of the magnetic buckle mechanism in FIG. 35 separated from each other.
FIG. 36 schematically illustrates a front view of the carrier device shown in FIG. 35.
FIGS. 37 to 39 schematically illustrate perspective views from different perspectives of a carrier device according to a twelfth embodiment of the present application.
FIG. 40 schematically illustrates a rear view of the carrier device according to the twelfth embodiment of the present application.
FIGS. 41 and 42 schematically illustrate perspective views from different perspectives of a carrier device according to a thirteenth embodiment of the present application, with male and female buckles of a magnetic buckle mechanism connected to each other.
FIG. 43 schematically illustrates a side view of the carrier device according to the thirteenth embodiment of the present application, with the male and female buckles of the magnetic buckle mechanism connected to each other.
FIG. 44 schematically illustrates a perspective view of the carrier device according to the thirteenth embodiment of the present application, with the male and female buckles of the magnetic buckle mechanism separated from each other.
FIG. 45 schematically illustrates a side view of the carrier device according to the thirteenth embodiment of the present application, with the male and female buckles of the magnetic buckle mechanism separated from each other.
FIG. 46 schematically illustrates a perspective view of a body of a carrier device mounted on but not connected to a suitcase according to a fourteenth embodiment of the present application, with the suitcase provided with a magnetic buckle adjusting mechanism according to an embodiment of the present application.
FIG. 47 schematically illustrates a front view of the body and the suitcase shown in FIG. 46.
FIG. 48 schematically illustrates a perspective view of the body of the carrier device mounted on and connected to the suitcase according to the fourteenth embodiment of the present application.
FIG. 49 schematically illustrates a perspective view of a carrier device according to a fifteenth embodiment of the present application, with male and female buckles of a magnetic buckle mechanism connected to each other.
FIG. 50 schematically illustrates a perspective view of the carrier device according to the fifteenth embodiment of the present application, with the male and female buckles of the magnetic buckle mechanism separated from each other.
FIG. 51 schematically illustrates a perspective view of a carrier device according to a sixteenth embodiment of the present application, with male and female buckles of a magnetic buckle mechanism connected to each other.
FIGS. 52 and 53 schematically illustrate perspective views from different perspectives of the carrier device according to the sixteenth embodiment of the present application, with the male and female buckles of the magnetic buckle mechanism separated from each other.

### DETAILED DESCRIPTION OF THE EMBODIMENTS

To make the above objects, features, and advantages of the present application more understandable, the specific embodiments of the present application will be described in detail with reference to the accompanying drawings.

It is to be understood that although the terms such as "first" and "second" may be used herein to describe various elements, they are merely used for the purpose of distinguishing between various elements and do not imply any sequence, quantity, or significance. These terms are merely intended to differentiate one element from another element. For instance, without departing from the scope of the present application, a first element may be referred to as a second element, and similarly, a second element may be referred to as a first element. The terms such as "include" "comprise" and the like are intended to indicate that the element or object preceding these terms encompasses all the elements or objects listed thereafter, as well as their equivalents, while not excluding other elements or objects. In addition, in the description of the present application, the terms "a" or "an" may include one or more items, unless specifically stated otherwise.

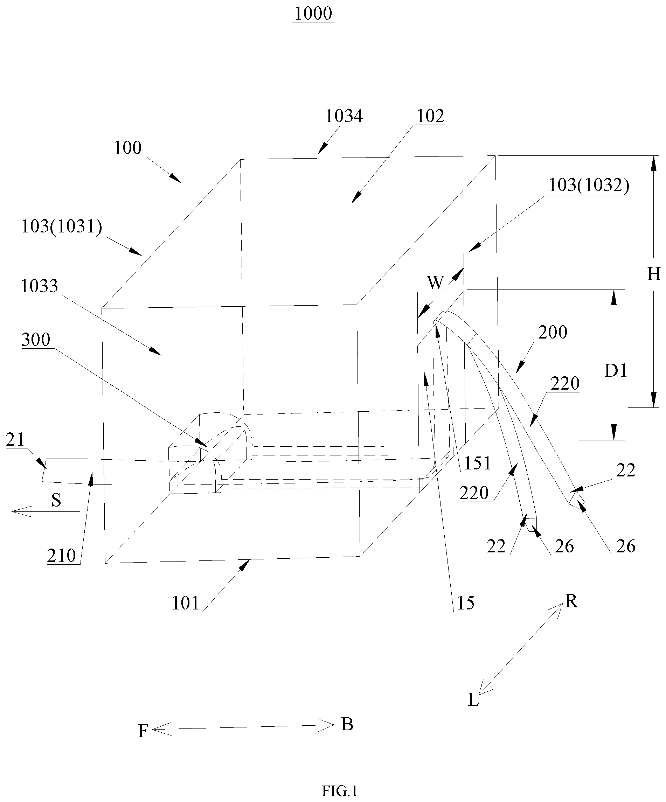

FIG. 1 is a perspective view schematically illustrating a box fixing structure 1000 according to a first embodiment of the present application. As shown in FIG. 1, the box fixing structure 1000 includes a box 100, a restraining strap 200, and an adjuster (also referred to as a limiting device) 300.

The box 100 may be, for example, any suitable type of carrier. In some embodiments, the box 100 may be a plastic box, a metal box, or the like for holding articles. In some embodiments, the box 100 may be a pet box, a pet basket, a pet bag, or the like for receiving a pet. A shape of the box 100 may be a cube, a rectangular cuboid, or other irregular forms. The box 100 generally includes a bottom plate 101, a top plate 102, and side plates 103 located between the bottom plate 101 and the top plate 102. A distance between the top plate 102 and the bottom plate 101 of the box 100 defines a height H of the box 100. The side plates 103 may include a front side plate 1031, a rear side plate 1032, a left side plate 1033, and a right side plate 1034. In some embodiments, the box 100 may have a left-right symmetrical shape. In some embodiments, the box 100 may be provided with a handle (not shown in FIG. 1). The handle may be mounted on the top plate 102 of the box 100, or alternatively, the handle may be attached to any two opposing side plates of the box 100.

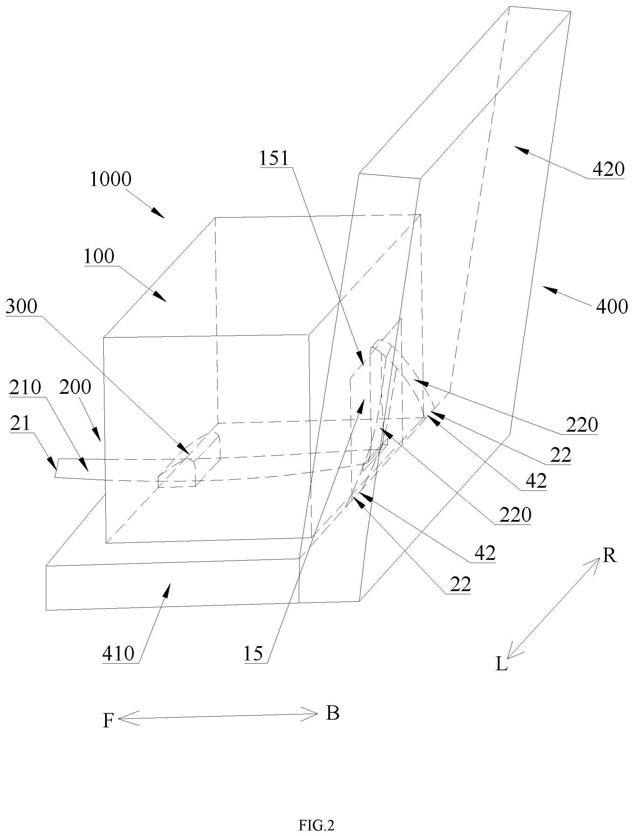

It should be noted that, unless otherwise specified and limited, the directional terms "front", "rear", "left", "right" and other directional terms in the embodiments of the present application refer to the "front", "rear", "left", "right" directions of the seat 400 when the box 100 is placed on the seat 400 (see FIG. 2), and arrows F and B are used in the drawings to schematically indicate the "front" and "rear" directions, and arrows L and R are used to schematically indicate the "left" and "right" directions. These directional terms are only used to make the description of the embodiments of the present application clearer, and are not intended to improperly limit the scope of protection of the present application.

Referring to FIG. 2, the seat 400 may be, but is not limited to, a seat of a transport, such as a vehicle seat, an aircraft seat, or the like. The seat 400 includes a seating part 410 and a backrest part 420. A front side of the seat 400 is provided, for example, with two or more sockets 42. The two or more sockets 42 are positioned between the seating part 410 and the backrest part 420 and spaced apart in a lateral direction (left-right direction). Each socket 42 may be an ISOFIX socket.

With continued reference to FIG. 1, the restraining strap 200 is attached to the box 100. The restraining strap 200 includes two connecting ends 22. The two connecting ends 22 are located outside of the box 100 and are provided with anchors 26. Each anchor 26 is configured to be connected to an anchoring point in any suitable position. Referring to FIG. 2, when the box 100 is placed on the seat 400, the bottom plate 101 of the box 100 is supported by the seating part 410, and the rear side plate 1032 of the box 100 faces the backrest part 420. The two connecting ends 22 of the restraining strap 200 are detachably connected to the corresponding sockets 42, which serve as anchoring points, respectively, so as to connect the box 100 to the seat 400. It should be noted that the anchor 26 is correspondingly an ISOFIX connector.

The adjuster 300 is connected to the restraining strap 200. A relative position of the adjuster 300 to the restraining strap 200 can be adjusted to adjust a length of the restraining strap 200 located between the adjuster 300 and the anchor 26. Thus, when the box 100 is placed on the seat 400 and each anchor 26 is connected to the corresponding socket 42, the restraint strap 200 connected between the box 100 and the sockets 42 can be tensioned by adjusting the length of the restraint strap 200 located between the regulating device 300 and the anchors 26. Thus, in case of emergency braking, the box 100 placed on the seat 400 may be subjected to an effective tension of the tensioned restraining strap 300 and thus is not easily slipping or even falling off forward with respect to the seat 400. In some embodiments, the adjuster 300 may have a structure such as a A-LOCK, a webbing adjusting device, or a ladder lock slider buckle, as long as the adjuster 300 can realize length adjustment and fixation of the restraining strap 200.

Referring to FIG. 1, the adjuster 300 may be mounted to the box 100, the restraining strap 200 passes through the adjuster 300 and can be locked by the adjuster 300. The strap 200 may also include an adjusting end 21. The adjuster 300 may be located between the adjusting end 21 of the restraining strap 200 and each of the connecting ends 22. The user can pull the adjusting end 21 in a direction S to shorten the length of the portion of the restraining strap 200 located between the adjuster 300 and the anchor 26. It is to be understood that when the portion of the restraining strap 200 located between the adjuster 300 and the anchor 26 is tensioned without the need to continue pulling the adjusting end 21, the restraining strap 200 may be locked by the adjuster 300, so that the portion of the restraining strap 200 located between the adjuster 300 and the anchor 26 may be maintained in a tensioned state.

It is to be noted that the number of the connecting ends 22 of the restraining strap 200 is not limited to the two as described above. In some embodiments, the restraining strap 200 may have one connecting end 22, the anchor 26 provided on the connecting end 22 may be selectively connected to one of two or more sockets 42. Alternatively, in some embodiments, the restraining strap 200 may have more than two connecting ends 22, a plurality of connecting ends 22 may be provided with a plurality of anchors 26 correspondingly. At least a part of the plurality of anchors 26 may be selectively connected to two or more sockets 42, and the other anchors 26 may be detachably connected to any other suitable anchoring points. It is to be understood that in order to accommodate different types of anchoring points, the type of anchor 26 is not limited to ISOFIX connectors, and in some embodiments, the anchor 26 may be, for example, a hook, a fastener, or the like.

An exemplary embodiment of the restraining strap 200 is shown in FIG. 1. The restraining strap 200 includes, for example, a first sub-strap 210 and two second sub-straps 220. The restraining strap 200 is generally Y-shaped. A first end of the first sub-strap 210 corresponds to the adjusting end 21 of the restraining strap 200, and a second end of the first sub-strap 210 is connected to first ends of the two second sub-straps 220. Second ends of the two second sub-straps 220 correspond to two connecting ends 22. Each of the connecting ends 22 is provided with an anchor 26.

With continued reference to FIG. 1, the adjuster 300 may be provided at a bottom of the front side plate 1031 of the box 100. In other embodiments, the adjuster 300 may be provided on top of the front side plate 1031 of the box or at other suitable locations. The first sub-strap 210 extends through the adjuster 300, and the connecting end 22 on each second sub-strap 220 extends rearwardly from the front side plate 1031 along the bottom of the box 100 to the rear side plate 1032, then extends upwardly along the rear side plate 1032, and then extends toward the outside of the box 100 from a predetermined height D1 of the rear side plate 1032 (also referred to as the connecting end 22 leaving from the box 100 from the predetermined height). In some embodiments, the predetermined height D1 is not less than half of the height H, i.e., D1≥H/2. In some embodiments, the predetermined height D1 may be close to or equal to the height H. Of course, in some embodiments, the predetermined height D1 may be less than half of the height H. In some embodiments, the predetermined height D1 may be, for example, greater than one third or one quarter of the height H, among other possibilities.

Referring to FIG. 2, when the box 100 is mounted to the seat 400, each of the connecting ends 22 extending from the predetermined height D1 extends toward a rear lower portion of the box 100 to allow each of the anchors 26 to be connected to the corresponding socket 42. When the restraining strap 200 located between the adjuster 300 and the anchor 26 is tensioned, the restraining strap 200 can effectively suppress the tendency of the box 100 to roll forward, so that the box 100 is stably supported on the seat 400.

In some embodiments, the rear side plate 1032 of the box 100 may be provided with a rigid member 15. The rigid member 15 may be made of a rigid material, including, but not limited to, rigid plastic, metal, or the like. The rigid member 15 has a supporting part 151. The supporting part 151 may be lower than or flush with the top plate 102. Each connecting end 22 curves around the supporting part 151 of the rigid member 15 and then protrudes toward the outside of the box 100. A height of the supporting part 151 corresponds to the predetermined height D1. The rigid member 15 may be attached to the rear side plate 1032 of the box 100 by any suitable means as long as the restraining strap 200 can be supported by the supporting part 151. The rigid member 15 may be a solid member or a hollow member having a hollow channel.

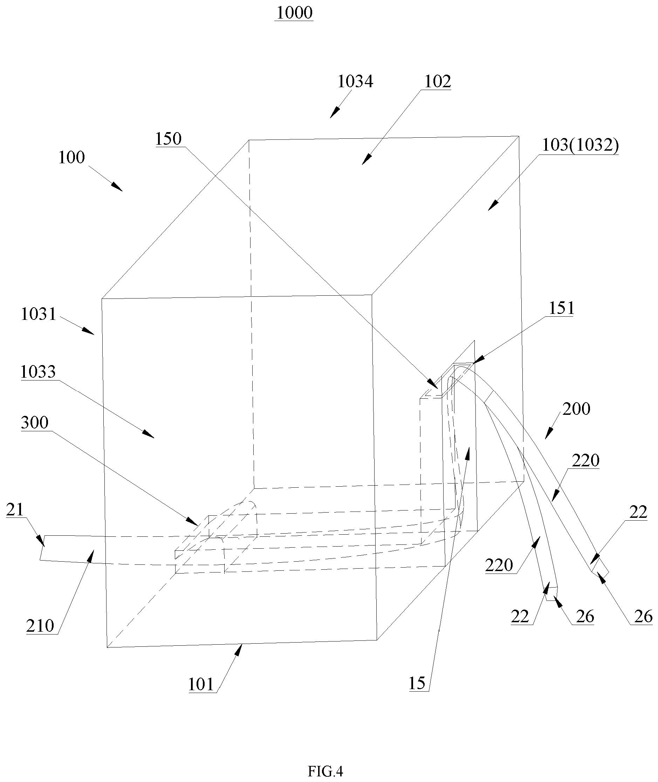

Referring to FIG. 1, when the rigid member 15 is a solid member (for example, a solid sheet), each connecting end 22 extends upwardly between the rear side plate 1032 and the rigid member 15, and curves around the supporting part 151 of the rigid member 15 and then protrudes toward the outside of the box 100. Referring to FIG. 4, when the rigid member 15 has a hollow channel 150, each connecting end 22 of the restraining strap 200 enters the hollow channel 150 from the bottom of the hollow channel 150, and then curves around the supporting part 151 of the rigid member 15 and then protrudes outwardly.

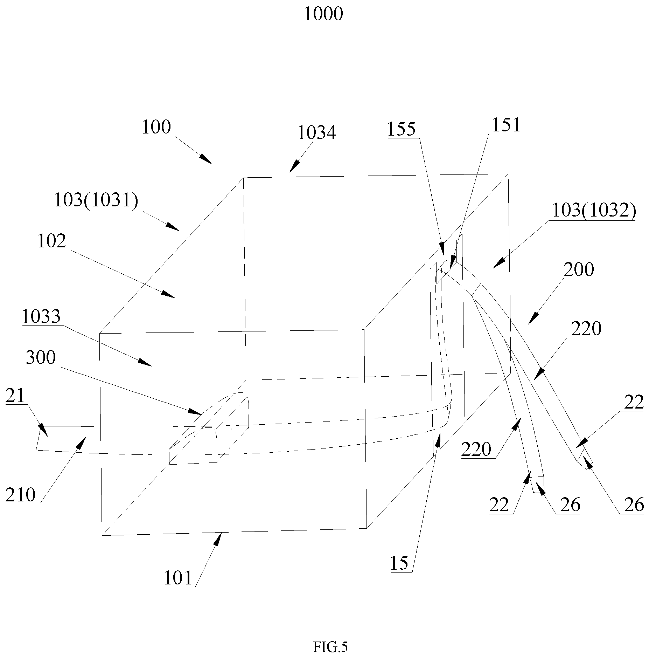

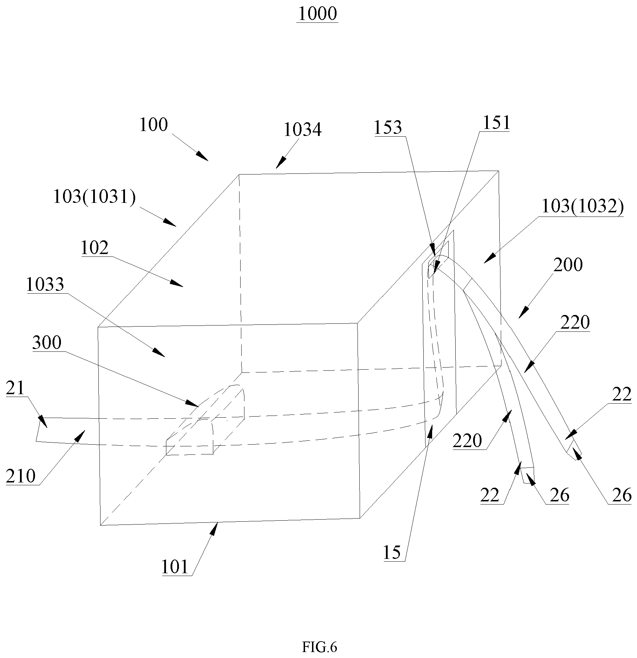

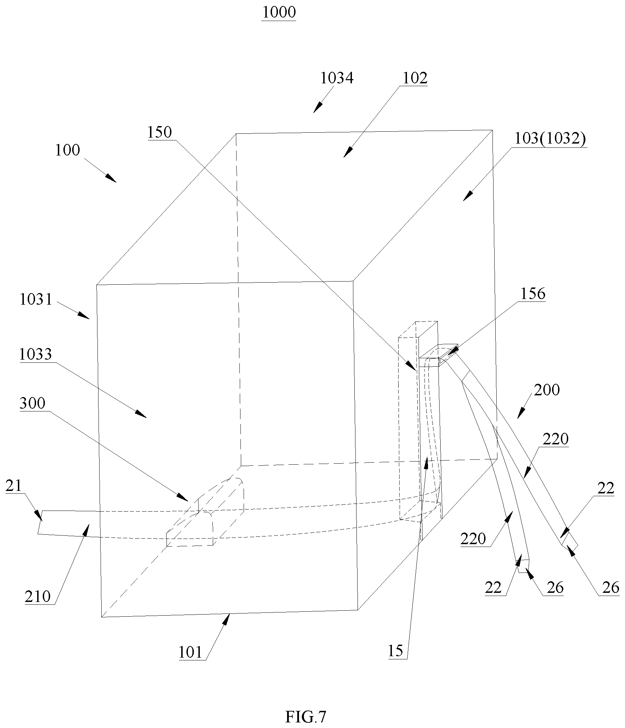

Referring to FIGS. 1 and 4, in some embodiments, an upper edge of the rigid member 15 forms the supporting part 151. Referring to FIG. 5, in some embodiments, a downwardly extending notch 155 is formed at the upper edge of the rigid member 15, and a lower edge of the notch 155 forms the supporting part 151. Referring to FIG. 6, in some embodiments, the rigid member 15 is provided with an orifice 153. A lower edge of the orifice 153 forms the supporting part 151. Referring to FIG. 7, in some embodiments, the rigid member 15 is provided with an opening 156 that is remote from the bottom plate 101 of the box 100. The opening 156 may be provided in an area of the rear side plate 1032 above half of the height thereof and extend outwardly, or may extend outwardly from an area of the rear side plate 1032 proximate to the top plate 102. Each connecting end 22 of the restraining strap 200 extends from the opening 156 to the outside of the box 100.

In some embodiments, the rigid member 15 may be embedded within the rear side plate 1032 without protruding outwardly from the rear side plate 1032. In some embodiments, the rigid member 15 may be attached to the rear side plate 1032 and protrude outwardly from the rear side plate 1032. In some embodiments, a portion of the rigid member 15 may be embedded within the rear side plate 1032, and another portion of the rigid member 15 protrudes outwardly from the rear side plate 1032.

In some embodiments, the rear side plate 1032 of the box 100 includes a cover layer 10321, and the rigid member 15 is located outside the cover layer 10321. A hardness of the rigid member 15 is greater than that of the cover layer 10321. The cover layer 10321 may be made of, for example, a fabric. Each connecting end 22 extends upwardly between the cover layer 10321 and the rigid member 15, and protrudes from the supporting part 151 of the rigid member 15 toward the outside of the box 100.

This embodiment does not limit the size and shape of the rigid member 15. In some embodiments, the bottom of the rigid member 15 may extend to the bottom plate 101 of the box 100. In some embodiments, the bottom of the rigid member 15 may be higher than the bottom plate 101. In some embodiments, the rigid member 15 may be located at a laterally intermediate position of the rear side plate 1032, and a width W of the rigid member 15 may be less than a width of the rear side plate 1032. In some embodiments, the rigid member 15 may correspond to the size of the rear side plate 1032. In some embodiments, the rigid member 15 may also be positioned offset to the left or right of the rear side plate 1032. In some embodiments, two or more rigid members 15 can be provided, the two or more rigid members 15 may be arranged symmetrically to the left and right, and the connecting ends 22 of the restraining straps 200 curve around the supporting parts 151 of the corresponding rigid members 15 and then protrude toward the outside of the box 100, respectively.

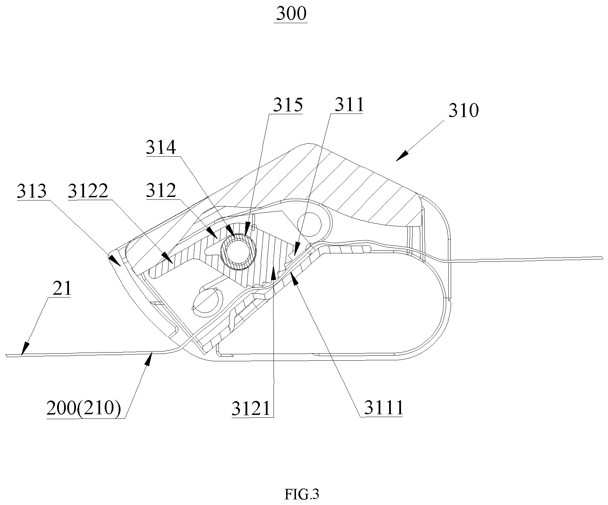

Referring to FIGS. 1 to 3, an exemplary embodiment of an adjuster 300 is shown. The adjuster 300 is mounted at the bottom of the box 100, proximate to the front side plate 1031 of the box 100. The adjuster 300 includes, for example, a lock 310 provided on the box 100. The lock 310 may include a housing 313, a locking member 312, a pivot 314, and a torsion spring 315. The locking member 312, the pivot 314, and the torsion spring 315 are mounted to the housing 313, and the housing 313 is mounted to the box 100. The housing 313 is internally formed with a locking channel 311 through which the restraining strap 200 passes. The restraining strap 200 (more specifically, the first sub-strap 210) enters the housing 313 from one end of the locking channel 311 and leaves from the housing 313 from the other end of the locking channel 311. The locking member 312 is mounted to the housing 313 by the pivot 314, the torsion spring 315 is sleeved on the pivot 314 and connected between the housing 313 and the locking member 312. More specifically, a middle portion of the locking member 312 is pivotally connected to the housing 313 through the pivot 314. Referring to FIG. 3, a first end 3121 of the locking member 312 acts as a locking end to abut the first sub-strap 210 against a channel wall 3111 of the locking channel 311, thereby locking the position of the restraining strap 200. The torsion spring 315 is used to hold the locking member 312 in a locked state shown in FIG. 3. A second end 3122 of the locking member 312 acts as a pressing end to enable the locking member 312 to rotate about the pivot 314, thereby releasing the first end 3121 of the locking member 312 from locking the first sub-strap 210.

In some embodiments, the first end 3121 of the locking member 312 may have an arcuate surface configured to abut against the first sub-strap 210. The arcuate surface may be provided with teeth. When the first end 3121 of the locking member 312 abuts the first sub-strap 210 against the channel wall 3111, the abutment between the teeth and the first sub-strap 210 can effectively prevent the movement of the first sub-strap 210. In some embodiments, the teeth on the arcuate surface may be provided in a ratchet configuration, such that when the locking member 312 is in the locked state, the restraining strap 200 may be pulled by the adjusting end 21 without pressing the second end 3122 of the locking member 312, so as to tension the portion of the restraining strap 200 located between the adjuster 300 and the anchor 26. When the restraining strap 200 is adjusted in place, the adjuster 300 can maintain the portion of the restraining strap 200 located between the locking member 312 and the anchor 26 in tension without further pulling the adjusting end 21. It is to be understood that when it is desired to disconnect the anchor 26 from the socket 42, the second end 3122 of the locking member 312 can be pressed to release the first end 3121 of the locking member 312 from abutting against the first sub-strap 210, and the portion of the restraining strap 200 located between the adjuster 300 and the anchor 26 can be loosened.

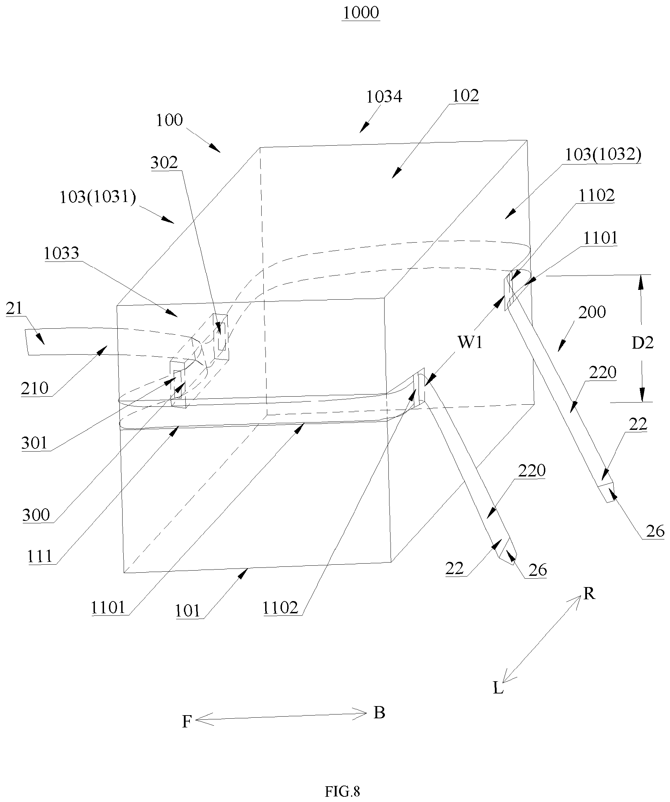

FIG. 8 is a perspective view schematically illustrating a box fixing structure 1000 according to a second embodiment of the present application. The box fixing structure 1000 includes a box 100, a restraining strap 200, and an adjuster 300. In case of no conflict, the box 100 may refer to the description in the first embodiment. For example, the box 100 includes a bottom plate 101, a top plate 102, and side plates 103 which includes a front side plate 1031, a rear side plate 1032, a left side plate 1033, and a right side plate 1034. In case of no conflict, the restraining strap 200 may refer to the description in the first embodiment. For example, the restraining strap 200 may include a first sub-strap 210 and two second sub-straps 220. The restraining strap 200 is generally Y-shaped. A first end of the first sub-strap 210 corresponds to the adjusting end 21 of the restraining strap 200, and a second end of the first sub-strap 210 is connected to first ends of the two second sub-straps 220. Second ends of the two second sub-straps 220 correspond to two connecting ends 22. Each of the connecting ends is provided with an anchor 26. In case of no conflict, the adjuster 300 may refer to the adjuster 300 in the first embodiment.

Referring to FIG. 8, the two connecting ends 22 of the restraining strap 200 extend from the front side plate 1031 toward the left side plate 1033 and the right side plate 1034, respectively, then extend rearwardly along the left side plate 1033 and the right side plate 1034, respectively, and extend from a predetermined height D2 of the box 100 to the outside of the box 100. A relationship between the predetermined height D2 and the height H of the box may be referred to the relationship between the predetermined height D1 and the height H of the box as described above.

Referring to FIG. 8, in some embodiments, the adjuster 300 may be mounted in a laterally intermediate position on the front side plate 1031, and the adjuster 300 may be above the bottom plate 101 of the box 100. The first sub-strap 210 corresponds to the front side plate 1031 of the box 100. The first ends of the two second sub-straps 220 are each connected to the second end of the first sub-strap 210, and the second ends of the two second sub-straps 220 passes through the adjuster 300.

In some embodiments, the adjuster 300 may include the lock 310 described in the first embodiment, and the two second sub-straps 220 have portions stacked together and located between the first end 3121 of the locking member 312 and the channel wall 3111 of the locking channel 311. When the locking member 312 is in the locked state, the locking member 312 abuts the two second sub-straps 220, which are stacked together, against the channel wall 3111 of the locking channel 311, so that the position of the restraining strap 200 can be locked. When the user pulls the adjusting end 21, the two second sub-straps 220 can slide at the same time with respect to the locking channel 311. Of course, in other embodiments, the adjuster 300 may have other implementations.

Referring to FIG. 8, in some embodiments, the adjuster 300 includes opposing openings 301 and 302 in the left-right direction. The two connecting ends 22 may extend out of the adjuster 300 through the openings 301 and 302, respectively.

With continued reference to FIG. 8, in some embodiments, the box 100 may be provided with a guiding structure 111 configured for guiding and supporting the restraining strap 200. The guiding structure 111 defines a predetermined height D2. In some embodiments, the guiding structure 111 may be provided on the side plates 103 of the box 100. The guiding structure 111 includes, for example, a slot-type structure 1101 provided on the side plates 103 and at least one stopper 1102. The slot-type structure extends, for example, from each of the left side plate 1033 and the right side plate 1034 of the box 100 to the rear side plate 1032 of the box 100. At least a portion of the stopper 1102 is adjacent to an end of the corresponding slot-type structure at the rear side plate 1032, and the two connecting ends 22 curve around the corresponding stoppers 1102 and then protrude toward the outside of the box 100.

With continued reference to FIG. 8, in some embodiments, a lateral width of the box 100 is greater than a lateral distance between two sockets 42 on the seat 400, and the lateral width W1 between the locations where the two connecting ends 22 are leaving from the box 100 may be greater than the lateral distance between the two sockets 42. The lateral width W1 in FIG. 8 generally corresponds to the width between the two stoppers 1102.

In some embodiments, when the lateral width of the box 100 is less than the lateral distance between the two sockets 42, the two connecting ends 22 may protrude toward the outside of the box 100 from the left side plate 1033 and the right side plate 1034, respectively.

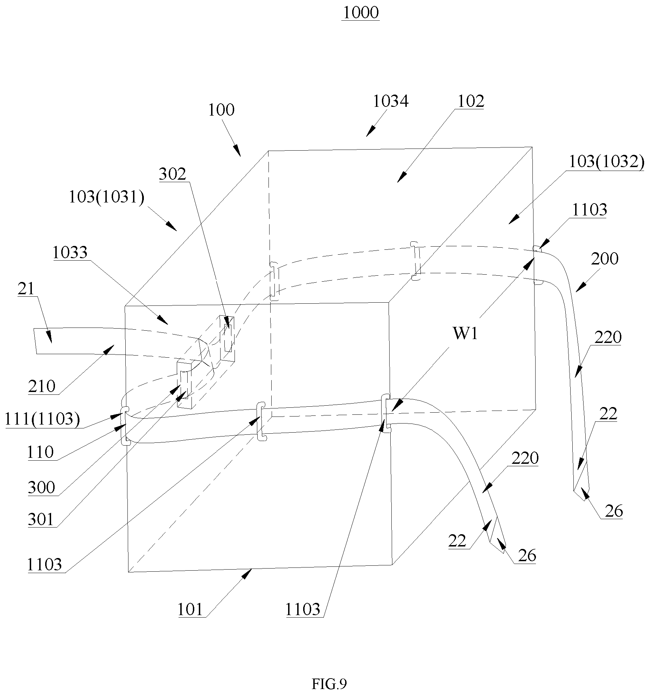

FIG. 9 illustrates a variant of the guiding structure 111. In some embodiments, the guiding structure 111 includes, for example, one or more engaging members 1103 attached to the side plates 103. The engaging members 1103 defines passages 110 through which the restraining straps 200 pass. In some embodiments, the engaging member 1103 may be made of metal, plastic, or other suitable material. The one or more engaging members 1103 can be arranged on one or more of the front side plate 1031, the rear side plate 1032, the left side plate 1033, and the right side plate 1034 as needed. In some embodiments, the engaging member 1103 may be connected to the box 110 to form a closed ring. In some embodiments, the engaging member 1103 may be, for example, hook-shaped or C-shaped.

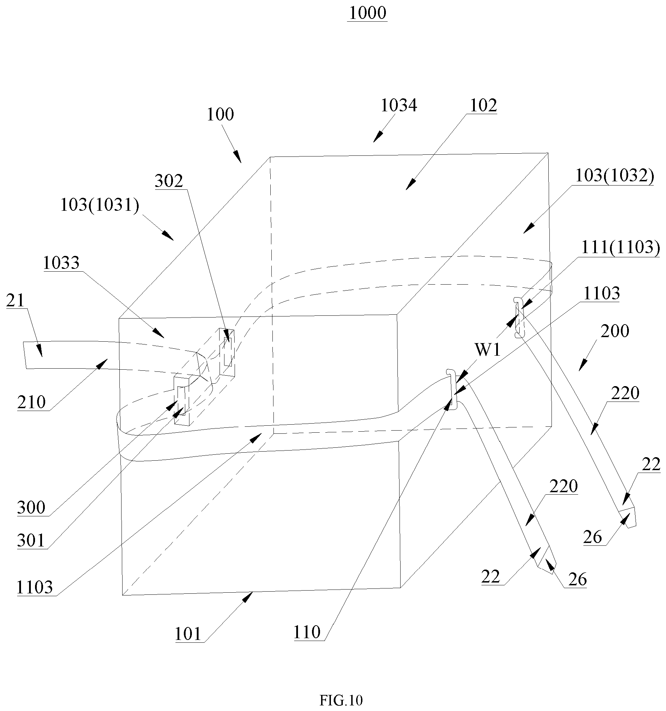

FIG. 10 illustrates another variant of the guiding structure 111. The guiding structure 111 includes, for example, two engaging members 1103, which are provided on the rear side plate 1032 and spaced apart in a lateral direction. The two connecting ends 22 curve round the corresponding engaging member 1103 and then leave from the box 100. The two engaging members 1103 are arranged symmetrically to the left and right on the rear side plate 1032, for example. A lateral distance between the two engaging members 1103 corresponds to the lateral width W1.

In some embodiments, the guiding structure 111 may include, for example, one engaging member 1103 located in a lateral middle position of the rear side plate 1032. The two connecting ends 22 intersect and extend through the passage 110 of the engaging member 1103 and then extend diagonally downwardly.

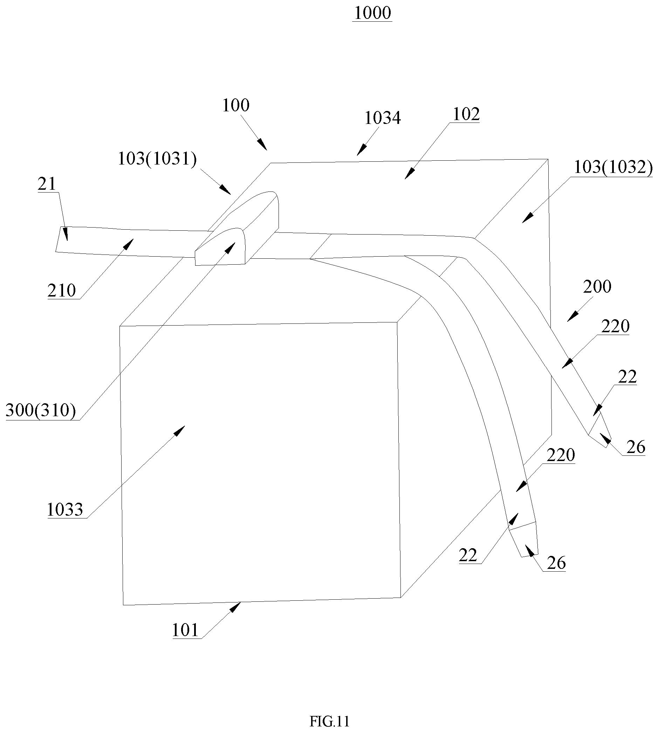

FIG. 11 is a perspective view schematically illustrating a box fixing structure 1000 according to a third embodiment of the present application. The box fixing structure 1000 includes a box 100, a restraining strap 200, and an adjuster 300. In case of no conflict, the box 100 may refer to the description in the first embodiment. For example, the box 100 includes a bottom plate 101, a top plate 102, a front side plate 1031, a rear side plate 1032, a left side plate 1033, and a right side plate 1034. In case of no conflict, the restraining strap 200 may refer to the description in the first embodiment. For example, the restraining strap 200 may include a first sub-strap 210 and two second sub-straps 220. The restraining strap 200 is generally Y-shaped. A first end of the first sub-strap 210 corresponds to the adjusting end 21 of the restraining strap 200, and a second end of the first sub-strap 210 is connected to first ends of the two second sub-straps 220. Second ends of the two second sub-straps 220 correspond to two connecting ends 22, each of the connecting ends 22 is provided with an anchor 26. In case of no conflict, the adjuster 300 may refer to the adjuster 300 in the first embodiment.

Referring to FIG. 11, in some embodiments, the adjuster 300 may be mounted on the front side of the top plate 102 of the box 100. The restraining strap 200 corresponds to the top plate 102 and the rear side plate 1032 of the box 100, and the two connecting ends 22 extend from the top plate 102 toward the rear lower portion of the rear side plate 1032. More specifically, the first sub-strap 210 is position-adjustably connected to the adjuster 300. The first ends of the two second sub-straps 220 may be connected to the second end of the first sub-strap 210, above the top plate 102 or behind the rear side plate 1032. The second ends of the two second sub-straps 220 extend toward the rear lower portion of the box 100 and may be connected to the corresponding sockets 42 by anchors 26.

In some embodiments, the rear side plate 1034 as a whole may be made of a rigid material. In some embodiments, the adjuster 300 may be provided on the front side plate 1031, e.g., at the position near the top plate 102.

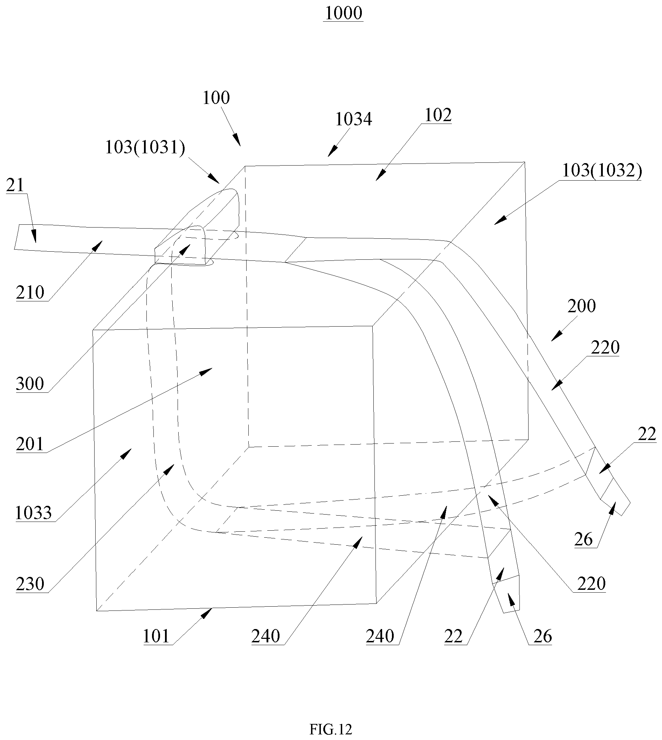

FIG. 12 is a perspective view schematically illustrating a box fixing structure 1000 according to a fourth embodiment of the present application. This box fixing structure 1000 is a variant of the box fixing structure 1000 provided in the third embodiment. In case of no conflict, the components of the box fixing structure 1000 and a relationship between the components of the present embodiment may refer to the description in the third embodiment. The following mainly illustrates the differences between the present embodiment and the third embodiment.

Referring to FIG. 12, the restraining strap 200 forms an annular structure 201 within which the box 100 is restrained, and the anchor 26 is proximate to the bottom of the box 100. More specifically, the restraining strap includes a first sub-strap 210 and two second sub-straps 220, and further includes a third sub-strap 230 and two fourth sub-straps 240. A first end of the third sub-strap 230 is connected to the first sub-strap 210, and a second end of the third sub-strap 230 is connected to first ends of the two fourth sub-straps 240. Second ends of the two fourth sub-straps 240 are respectively connected to the two second sub-straps 220 to form the annular structure 201 of the restraining box 100. The third sub-strap 230 and the two fourth sub-straps 240 pass around the front side plate 1031 and the bottom plate 101 of the box 100. The connecting point between each fourth sub-strap 240 and the corresponding third sub-strap 230 is proximate to the anchor 26.

In some embodiments, the adjuster 300 may include the lock 310 described in the first embodiment, and the first and third sub-straps 210, 230 have portions which are stacked together and located between the first end 3121 of the locking member 312 (see FIG. 3) and the channel wall 3111 of the locking channel 311. When the locking member 312 is in the locked state, the locking member 312 abuts the first and third sub-straps 210 and 230, which are stacked together, against the channel wall 3111 of the locking channel 311, so that the position of the restraining strap 200 can be locked. When the user pulls the adjusting end 21, the first sub-strap 210 and the third sub-strap 230 can slide at the same time with respect to the locking channel 311, so that a size of the annular structure is reduced and the box 100 is held tightly. Of course, in other embodiments, the adjuster 300 may have other implementations.

It should be noted that, although in the above-described embodiment, the user tensions the restraining strap 200 by manually operating the adjusting end 21, the method of tensioning the restraining strap 200 is not limited to thereto. For example, in some embodiments, the adjusting end 21 may be wound on a reel, and the restraining strap 200 can be tightened or loosened by electrically controlling the rotating direction of the reel.

The box fixing structure described in the embodiments of the present application can be provided as long as the length of the restraining strap 200 located between the adjuster 300 and the anchor 26 can be adjusted so that the restraining strap 200 located between the box 100 and the anchoring point is not loosened. In some embodiments, the restraining strap 200 may not be provided with a dedicated adjusting end 21. In some embodiments, the first sub-strap 210 is also not necessary.

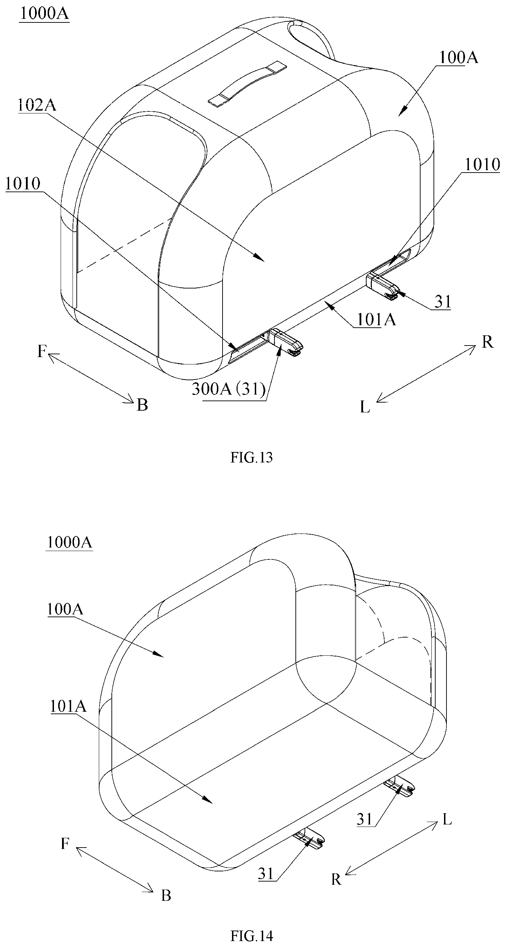

The box fixing structure provided in embodiments of the present application are illustrated in the above embodiments. However, it should be noted that the box fixing structure may also be provided as a carrier device. Embodiments of the carrier device provided by the present application will be enumerated and described below with reference to FIGS. 13 to 53.

For ease of understanding, the forward direction is indicated by arrow F, the backward direction is indicated by arrow B, the left direction is indicated by arrow L, and the right direction is indicated by arrow R in FIGS. 13 to 53. These directional terms are merely used to make the description of the embodiments of the present application clearer, and are not intended to improperly limit the scope of protection of the present application.

### Fifth embodiment

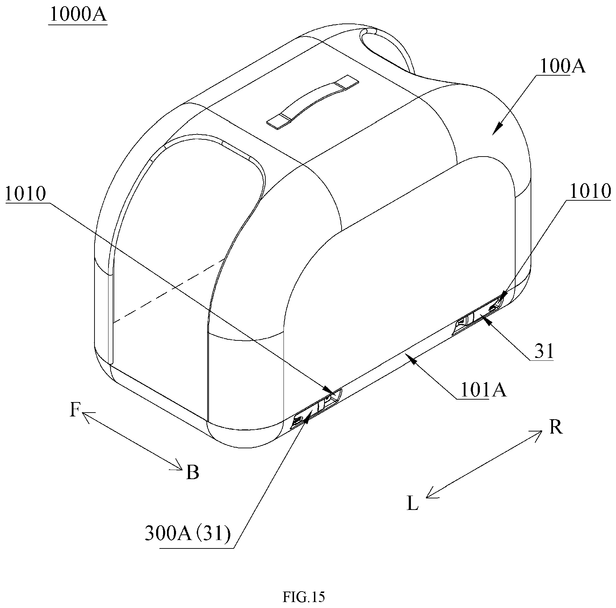

FIGS. 13 to 15 illustrate perspective views of a carrier device 1000A, such as an animal carrier device or other types of carrier device, according to a fifth embodiment. In FIGS. 13 and 14, a LATCH structure 300A is in a use state. In FIG. 15, the LATCH structure 300A is in a non-use state (alternatively referred to as a stowed state).

As shown in FIGS. 13 to 15, the carrier device 1000A includes a body 100A, and the body 100A may be, but is not limited to, a pet box, a pet basket, a pet bag, or the like. When the carrier device 1000A is an animal carrier device, the body 100A has a carrying space for accommodating an animal. The body 100A may be a one-piece molded part, or the body 100A may be assembled from multiple parts. In some embodiments, the body 100A can be divided into a bottom part 101A and an upper part 102A mounted above the bottom part 101A. The bottom part 101A may, for example, be made of a hard material to support the upper part 102A. The upper part 102A may include sheets of fabric and other materials that enclose the carrying space. A rear surface of the bottom part 101A is provided with the LATCH structure 300A, which can be detachably connected to an ISOFIX structure (alternatively referred to as an anchoring structure) on a vehicle seat. More specifically, the LATCH structure 300A includes, for example, at least one connecting member 31, each of which may be connected to a connecting point of the ISOFIX structure on the vehicle seat. In this embodiment, the LATCH structure 300A includes two connecting members 31. One end of each connecting member 31 is pivotally connected to the bottom part 101A, for example, by a pivot (not shown), and each connecting member 31 can pivot left and right about the pivot, so that the LATCH structure 300A has the use state and the non-use state.

When the LATCH structure 300A is in the use state, each of the connecting members 31 can extend out of the body 100A by pivoting around the pivot to a use position, so that the other end of each of the connecting members 31 can be connected to the connecting point of the ISOFIX structure on the vehicle seat. When the LATCH structure 300A is in the non-use state, each of the connecting members 31 may be pivoted toward the body 100A by pivoting around the pivot to a non-use position (also referred to as a stowed position).

The rear surface of the bottom part 101A has at least one receiving space 1010 for receiving the connecting member 31. In this embodiment, the rear surface of the bottom part 101A is provided with two receiving spaces 1010, and the two receiving spaces 1010 are oppositely disposed on the left and right sides of the rear surface of the bottom part 101A. The two receiving spaces 1010 correspond to the two connecting members 31. When the LATCH structure 300A is in the non-use state, each of the connecting members 31 is pivoted around the pivot to the stowed position and stowed in the corresponding receiving space 1010. For example, an outer side surface of the stowed LATCH structure 300A will be substantially flush with an outer side surface of the bottom part 101A.

Each connecting member 31 may be locked in the stowed position by any suitable locking structure. The LATCH structure 300A may also include a spring for driving each connecting member 31 to rotate toward the use position. The spring is provided, for example, between each connecting member 31 and the bottom part 101A. When the LATCH structure 300A is in the use state, each connecting member 31 is unlocked and is automatically ejected by a reaction force of the spring.

In this embodiment, the two connecting members 31 are horizontally rotated in the opposite direction, so as to rotate from the stowed position to the use position or from the use position to the stowed position. Rotating angles of both connecting members 31 are no greater than 90 degrees. In some alternative embodiments, the two connecting members 31 may be horizontally rotated in the same direction to switch to the use position or the stowed position.

In some embodiments, the LATCH structure 300A may include more than two connecting members 31, and correspondingly more than two receiving spaces 1010 are provided. More than two connecting members 31 may be connected to more than two connecting points of the ISOFIX structure on the vehicle seat, respectively.

### Sixth embodiment

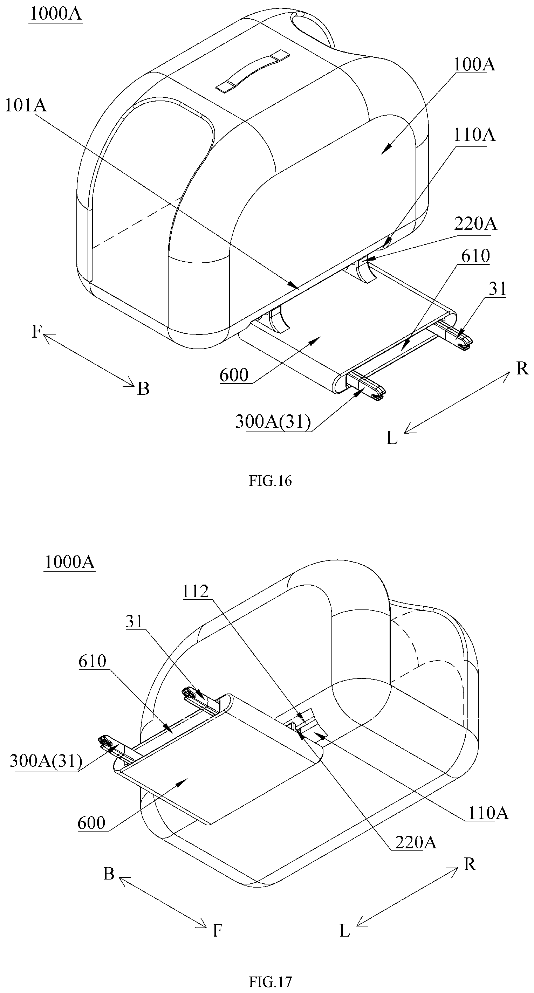

FIGS. 16 and 17 illustrate perspective views of a carrier device 1000A, such as an animal carrier device or other types of carrier devices, according to a sixth embodiment. The carrier device 1000A includes a body 100A. When the carrier device 1000A is an animal carrier device, the body 100A has a carrying space for accommodating an animal.

A connecting base 600 can be further provided between the body 100A and the vehicle seat. The connecting base 600 has a LATCH structure 300A, and the LATCH structure 300A can be connected to an ISOFIX structure on the vehicle. More specifically, the LATCH structure 300A includes, for example, at least one connecting member 31, each of which may be connected to a connecting point of the ISOFIX structure on the vehicle seat. In this embodiment, the Latch structure 300A includes two connecting members 31. One end of each connecting member 31 is pivotally connected to the connecting base 600, for example by a pivot (not shown). The connecting members 31 can extend out of the connecting base 600 or approach the connecting base 600 by horizontally rotating in the same direction or in opposite directions, so that the LATCH structure 300A has a use state and a non-use state (alternatively referred to as a stowed state).

The rear surface of the connecting base 600 may have a receiving space 610. Each connecting member 31 may be received in the receiving space 610 of the connecting base 600 when the LATCH structure 300A is in the non-use state.

In this embodiment, the body 100A may have an inner recessed space 110A in which a rigid rod 112, such as a metal rod, may be provided. The connecting base 600 is separated from the body 100A and provided with an engaging structure 220A thereon. The engaging structure 220A includes, for example, a hook. The engaging structure 220A can be detachably connected to the rod 112 on the body 100A, such that the body 100A is secured to the vehicle seat through the detachable connecting base 600. When the carrier device 1000A is in the use state, the engaging structure 220A is locked to the rod 112, and the connecting member 31 is connected to the connecting point of the ISOFIX structure of the vehicle seat.

The connecting base 600 may further include an unlocking mechanism (not shown) configured to unlock the engaging structure 220A from the rod 112. When the engaging structure 220A is unlocked from the rod 112, the carrier device 1000A can be separated from the connecting base 600.

In some alternative embodiments, the connecting base 600 is slidably connected to the bottom part 101A of the body 100A such that the connecting base 600 has a use position and a stowed position. For example, a receiving cavity may be provided at the bottom part of the body 100A. When the connecting base 600 is in the stowed position, the connecting base 600 is received in the receiving cavity and can be locked in the stowed position. After the connecting base 600 is unlocked, the connecting base 600 can horizontally protrude rearwardly from the receiving cavity, and when the connecting base 600 reaches the use position, the connecting base 600 can be locked in the use position. Afterwards, the body 100A can be connected to the ISOFIX structure of the vehicle seat by the LATCH structure 300A on the connecting base 600.

In some alternative embodiments, the connecting base 600 is pivotally connected to the bottom part 101A of the body 100A such that the connecting base 600 has a use position and a stowed position. When the connecting base 600 is in the stowed position, the connecting base 600 is pivoted to a position in contact with the rear or bottom surface of the body 100A. When the connecting base 600 is in the use position, the connecting base 600 is pivoted to a horizontal attitude, and at this time, the connecting base 600 protrudes rearwardly from the body 100A. Afterwards, the body 100A can be connected to the ISOFIX structure of the vehicle seat by the LATCH structure 300A on the connecting base 600.

### Seventh embodiment

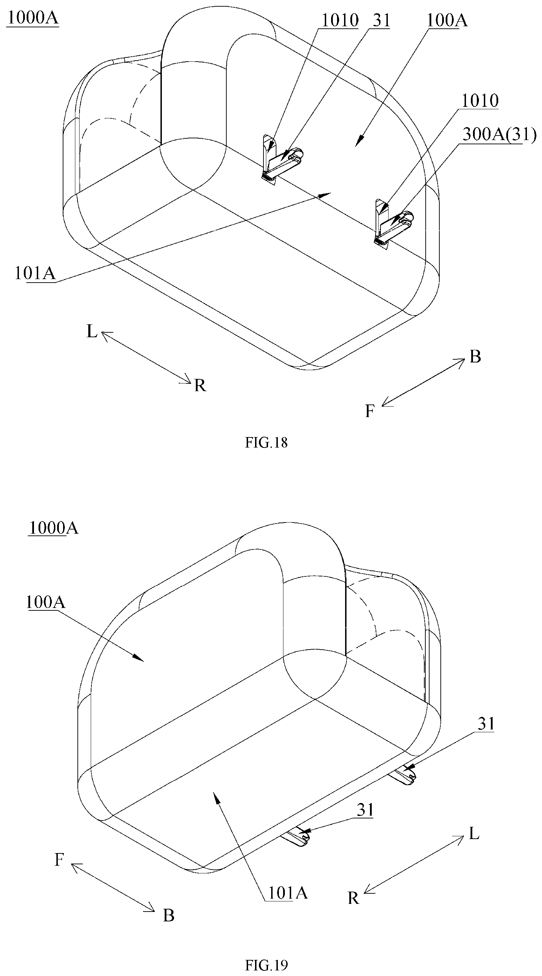

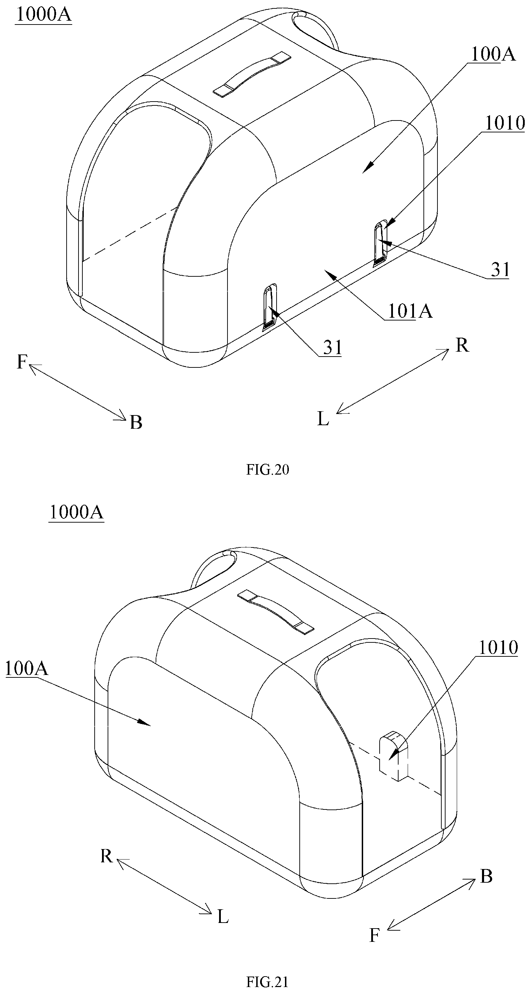

FIGS. 18 to 21 illustrate perspective views of a carrier device 1000A, such as an animal carrier device or other types of carrier devices, according to a seventh embodiment. In FIGS. 18 and 19, a LATCH structure 300A is in a use state. In FIG. 20, the LATCH structure 300A is in a non-use state (alternatively referred to as a stowed state).

The carrier device 1000A includes a body 100A. When the carrier device 1000A is an animal carrier device, the body 100A has a carrying space for accommodating an animal. The bottom part 101A of the body 100A is provided with the LATCH structure 300A. The LATCH structure 300A is disposed on the rear surface of the bottom part 101A. The LATCH structure 300A can be detachably connected to an ISOFIX structure on the vehicle seat.

The LATCH structure 300A includes, for example, at least one connecting member 31, each of which may connect to a connecting point of the ISOFIX structure on the vehicle seat. In this embodiment, the LATCH structure 300A includes two connecting members 31. One end of each connecting member 31 is pivotally connected to the bottom part 101A, for example by a pivot (not shown), and each connecting member 31 can rotate up and down around the pivot, such that the LATCH structure 300A has a use state and a non-use state. When the LATCH structure 300A is in the use state, each of the connecting members 31 can extended out of the body 100A to a use position, such that the other end of each of the connecting members 31 can be connected to the connecting point of the ISOFIX structure on the vehicle seat. When the LATCH structure 300A is in the non-use state, each of the connecting members 31 may be proximate to the body 100A to a non-use position (also referred to as a stowed position).

For example, the rear surface of the bottom part 101A is provided with at least one receiving space 1010 for receiving the connecting member 31. In this embodiment, the rear surface of the bottom part 101A is provided with two receiving spaces 1010 spaced apart in the left-right direction, and the two receiving spaces 1010 extend upwardly from the bottom surface of the body 100A. The heights of the two receiving spaces 1010 are substantially the same, and the two receiving spaces 1010 can be parallel to each other. The two receiving spaces 1010 correspond to the two connecting members 31. When the LATCH structure 300A is in the non-use state, each of the connecting members 31 is pivoted to the stowed position and stowed in the corresponding receiving space 1010. For example, an outer side surface of the stowed LATCH structure 300A may be flush with an outer side surface of the bottom part 101A, or may be recessed relative to the outer side surface of the bottom part 101A, or may be protruded relative to the outer side surface of the bottom part 101A.

The receiving spaces 1010 may be integrally formed with the bottom part 101A or may be two receiving spaces independent from the bottom part 101A. When the receiving space 1010 is integrally formed with the bottom part 101A, the receiving space 1010 may be a semi-open space and extends upwardly from the surface of the bottom part 101A.

Each connecting member 31 may be locked in the stowed position by any suitable locking structure. The LATCH structure 300A may also include a spring configured to drive each connecting member 31 to rotate toward the use position. The spring is provided, for example, between each connecting member 31 and the bottom part 101A. When the LATCH structure 300A is in the use state, each connecting member 31 is unlocked and is automatically ejected by a reaction force of the spring.

In this embodiment, the two connecting members 31 are vertically rotated in a first direction (from top to bottom) to the use position, with a rotational angle ranging between 90-180 degrees, for example. When the LATCH structure 300A is in the non-use state, the two connecting members 31 can be vertically rotated in a second direction (from bottom to top) to the stowed position, and the two connecting members 31 are stowed in the receiving spaces 1010. The first direction is opposite to the second direction.

### Eighth embodiment

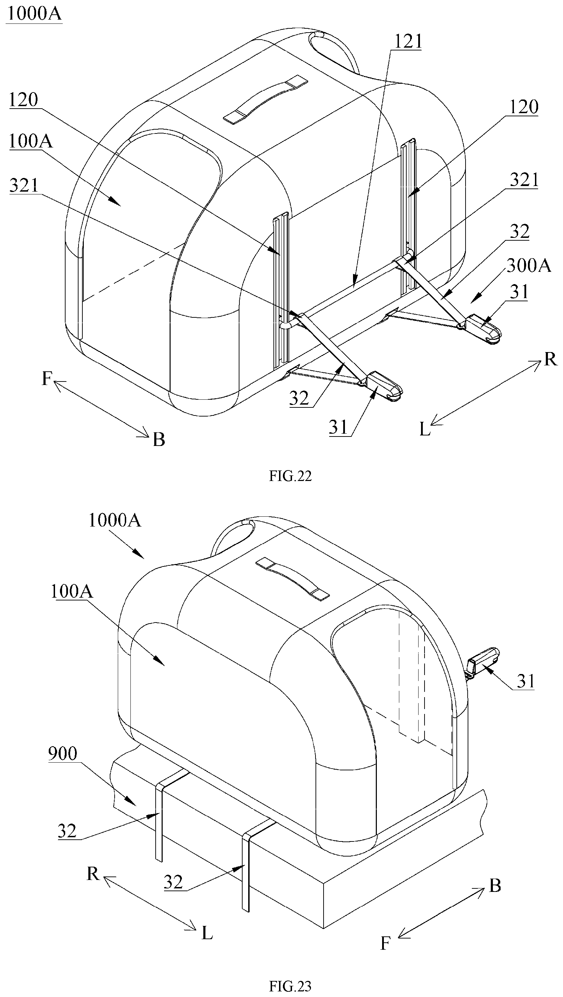

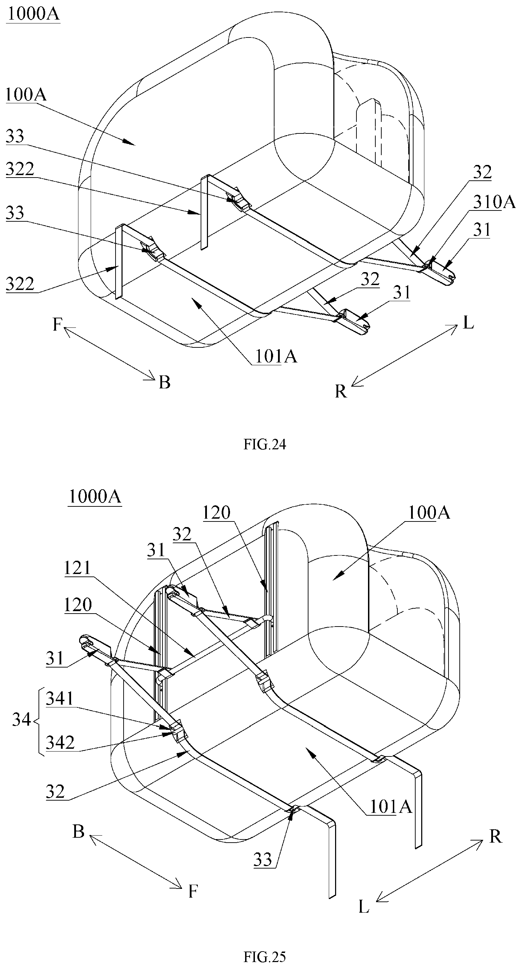

FIG. 22 illustrates a top perspective view of a carrier device 1000A, such as an animal carrier device or other types of carrier devices, according to an eighth embodiment, FIG. 23 illustrates a perspective view of the carrier device 1000A placed on a vehicle seat, and FIGS. 24 and 25 illustrate bottom perspective views of the carrier device 1000A.

The carrier device 1000A includes a body 100A. When the carrier device 1000A is an animal carrier device, the body 100A has a carrying space for accommodating an animal. The carrier device 1000A has two rails 120 arranged vertically and parallel to each other on either the front surface or the rear surface of the body 100A. In this embodiment, the two rails 120 are arranged on the rear surface of the body 100A.

The carrier device 1000A further includes a rigid rod 121 disposed on the same surface of the body 100A as the rail 120. Two ends of the rigid rod 121 are slidably engaged with the two rails 120 respectively, so as to be movable up and down in the rails 120.

The rail 120 (e.g., the interior of the rail 120) may be provided with an engaging device (not shown) configured to lock the position of the rod 121. When the engaging device is in a locked state, the rod 121 is locked by the engaging device at a predetermined height of the rail 120 and cannot be moved up and down. When the engaging device is in an unlocked state, the engaging device unlocks the rod 121 so that the rod 121 can move up and down along the rail 120.

The carrier device 1000A further includes a LATCH structure 300A that is detachably connected to an ISOFIX structure on a vehicle seat 900. More specifically, the LATCH structure 300A includes, for example, at least one connecting member 31, each of which may be connected to a connecting point of the ISOFIX structure on the vehicle seat. In this embodiment, the Latch structure 30 includes two connecting members 31.

The LATCH structure 300A also includes two webbings 32 respectively connected to the two connecting members 31. For example, the connecting member 31 includes a connecting hole 310A through which the webbing 32 passes such that the connecting member 31 can slide along the webbing 32. A first end 321 of the webbing 32 is connected to the rod 121, and a second end 322 of the webbing 32 can extend through a locking mechanism 33 fixed to the rear or bottom surface of the body 100A and then protrude toward the front of the body 100A. The locking mechanism 33 is, for example, an A-lock.

The locking mechanism 33 locks the webbing 32 when it is in a locked state, allowing a length of the portion of the webbing 32 located between the first end 321 and the locking mechanism 33 to be shortened by pulling the second end 322 of the webbing 32, but not allowing the length of the portion of the webbing 32 located between the first end 321 and the locking mechanism 33 to be lengthened by moving the body 100A forward. When the locking mechanism 33 is in an unlocked state, the locking mechanism 33 unlocks the webbing 32.

When the locking mechanism 33 is provided proximate to the front side of the bottom part 101A of the body 100A, the rear side of the bottom part 101A of the body 100A may be provided with a guiding structure 34, and the second end 322 of the webbing 32 passes through the guiding structure 34 before passing through the locking mechanism 33. The guiding structure 34 includes, for example, a recess 341 provided at the bottom part of the body 100A and a supporting rod 342 mounted in the recess 341, and the webbing 32 passes around the supporting rod 342.

When the carrier device 1000A is in the use state, the connecting member 31 is connected to the connecting point of the ISOFIX structure on the vehicle seat, and the locking mechanism 33 is in the locked state, and then the webbing 32 can be configured in a tensioned use state by moving the rod 121 upwardly. In this way, through the connection between the two connecting members 21 and the two connecting points of the ISOFIX structure of the vehicle seat, and the connecting points of the first end 321 of the webbing 32 and the rod 121 being away from the surface of the vehicle seat, the body 100A can be subjected to pulling force from an inclined portion of the webbing 32 between the first end 321 and the connecting member 21. Under the action of this pulling force, the body 100A can be prevented from rolling or twisting in the event of an unexpected situational impact to the vehicle.

When the connecting member 31 is to be separated from the ISOFIX structure of the vehicle seat, the rod 121 is moved downwardly to loosen the webbing 32, so that the LATCH structure 300A can be easily separated from the ISOFIX structure of the vehicle seat. Of course, the webbing 32 can also be loosened by unlocking the locking mechanism 33, so that the LATCH structure 300A can be easily separated from the ISOFIX structure of the vehicle seat.

In some embodiments, the body 100A is further provided with a receiving space (not shown), which may be provided on the same surface of the body 100A as the rail 120. The receiving space may receive the connecting member 31 or the entire LATCH structure 300A.

### Ninth embodiment

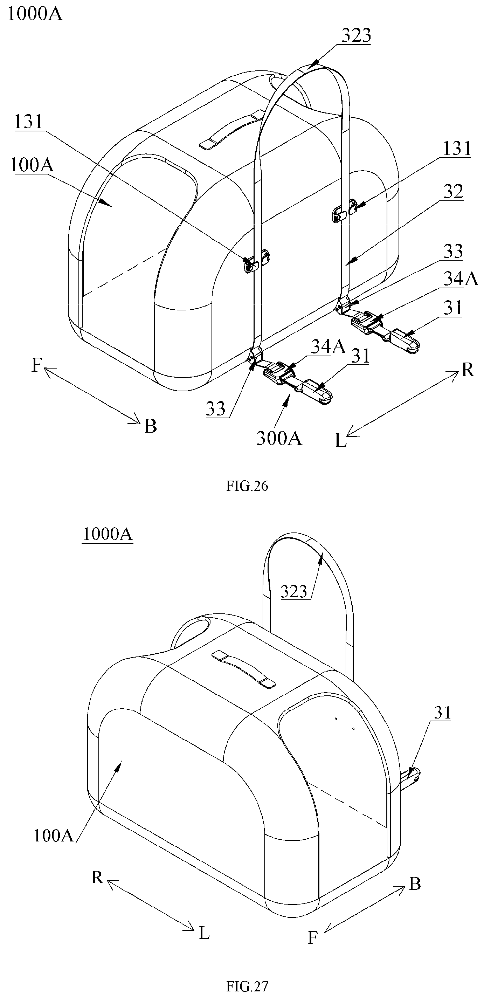

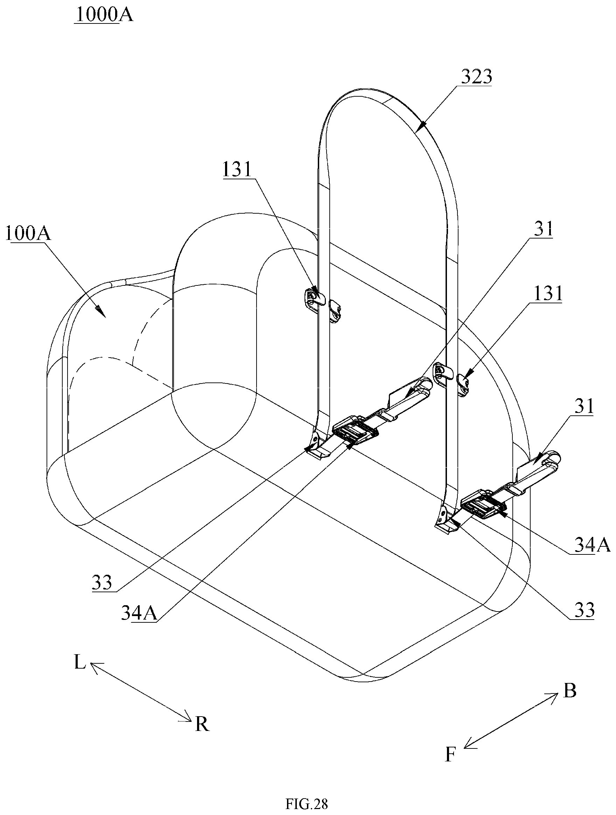

FIG. 26 illustrates a rear perspective view of a carrier device 1000A, such as an animal carrier device or other types of carrier devices, according to a ninth embodiment, FIG. 27 illustrates a front perspective view of the carrier device 1000A, and FIG. 28 illustrates a bottom perspective view of the carrier device 1000A.

The carrier device 1000A includes a body 100A. When the carrier device 1000A is an animal carrier device, the body 100A has a carrying space for accommodating an animal. At least one guiding structure 131 and at least one locking mechanism 33 are provided on the rear surface of the body 100A. For example, the locking mechanism 33 is proximate to the bottom surface of the body 100A, and the guiding structure 131 is higher than the locking mechanism 33. The guiding structure 131 includes, for example, a C-piece, and the locking mechanism 33 is, for example, an A-lock. For example, two guiding structures 131 and two locking mechanisms 33 are provided.

The carrier device 1000A further includes a LATCH structure 300A that can be detachably connected to an ISOFIX structure on a vehicle seat 900. More specifically, the LATCH structure 300A includes, for example, at least one connecting member 31, each of which may engage a connecting point of the ISOFIX structure on the vehicle seat. In this embodiment, the LATCH structure 300A includes two connecting members 31.

The LATCH structure 300A further includes a webbing 32 connected to the connecting member 31. Two ends of the webbing 32 are connected to the two connecting members 31 after passing through the corresponding guiding structures 131 and the locking mechanisms 33, respectively. A middle portion 323 of the webbing 32 is available for lifting by a user. The locking mechanism 33 locks the webbing 32 when it is in a locked state, allowing a length of the portion of the webbing 32 located between the connecting member 21 and the locking mechanism 33 to be shortened by pulling the middle portion 323 of the webbing 32, to tension the webbing 32, but not allowing the length of the portion of the webbing 32 located between the connecting member 31 and the locking mechanism 33 to be lengthened by moving the body 100A forward. When the locking mechanism 33 is in an unlocked state, the locking mechanism 33 unlocks the webbing 32. In some embodiments, the webbing 32 may be disconnected at the middle portion 323.

The webbing 32 may be provided with an adjuster 34A which can adjust the length of the webbing 32. The adjuster 34A is, for example, located between the locking mechanism 33 and the connecting member 31.

When the LATCH structure 300A is in the use state, the middle portion 323 of the webbing 32 may be secured around the head rest of the vehicle seat. When the vehicle is subjected to an impact, the body 100A can be prevented from twisting or rolling due to the fixation at the headrest end of the vehicle seat and the fixation at the two connecting points of the ISOFIX.

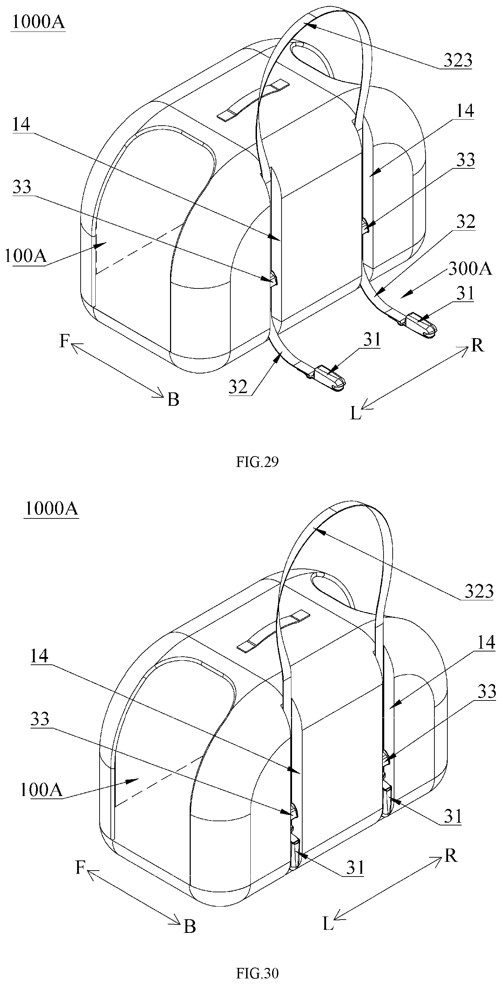

In some alternative embodiments, the body 100A is provided with a receiving space (not shown), a wall of which may be formed of a hard material. The receiving space may be disposed on the bottom surface of the body 100A, and the receiving space is in communication with outer side of the body 100A. The body 100A may additionally include two extensions (not shown in the drawings of this embodiment, reference may be made to the extensions 14 in FIG. 29 of the tenth embodiment), each of the extensions extends upwardly from the bottom surface of the body 100A. The extension may be a semi-open channel or a hollow channel. The extension has an upper opening adjacent to the top surface of the body 100A. The LATCH structure 300A is connected to the body 100A. The LATCH structure 300A has a webbing 32. The webbing 32 extends in the receiving space and the extension, and extends out of the body 100A through the upper opening of the extension. The LATCH structure 300A includes at least one connecting member 31 connected to the webbing 32. For example, the LATCH structure 300A includes two connecting members 31. A connecting relationship of the two connecting members 31 and the webbing 32 can be shown in FIG. 26. The two connecting members 31 are located at two ends of the same webbing 32. A middle portion of the webbing 32 extends out of the body 100A through the upper opening of the extension. When the LATCH structure 300A is in the use state, the connecting member 31 extends out of the receiving space to connect to the connecting point of the ISOFIX structure on the vehicle seat. When the LATCH structure 300A is in the non-use state, the connecting member 31 is disconnected from the connecting point of the ISOFIX structure of the vehicle seat, and the connecting member 31 can be received in the receiving space. The receiving space or extension may further include a locking mechanism (e.g., A-lock) configured for locking or unlocking the webbing 32. When the LATCH structure 300A is in the use state, a portion of the webbing 32 located between the connecting member 31 and the locking mechanism is tensioned by pulling the webbing 32 extending out of the upper opening, and the webbing 32 is locked by the locking mechanism. When the extension is a semi-open channel, a guiding structure (e.g., similar to the guiding structure 131 in FIG. 26) may be provided on the extension, so that the webbing 32 can be maintained in the extension to avoid falling off.

### Tenth embodiment

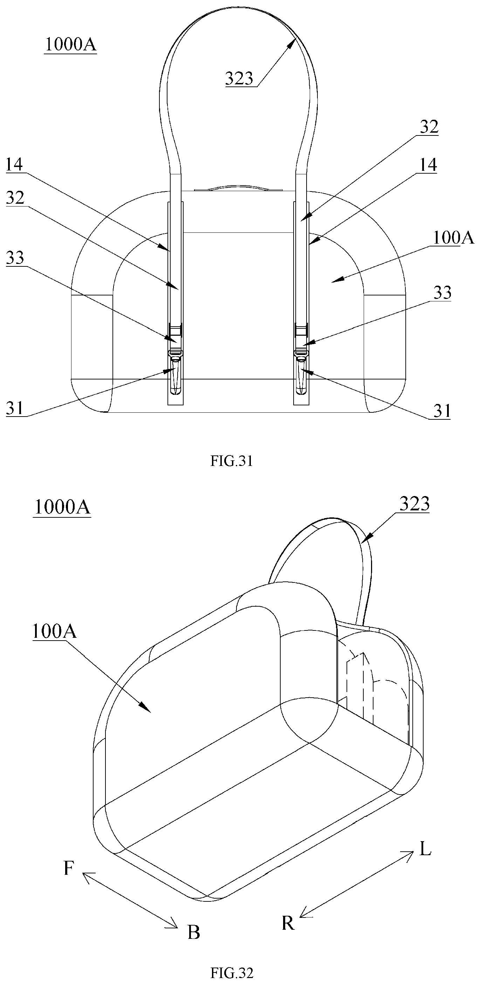

FIG. 29 illustrates a rear perspective view of a carrier device 1000A, such as an animal carrier device or other types of carrier devices, according to a tenth embodiment, with the LATCH structure 300A in a use state. FIG. 30 illustrates another rear perspective view of the carrier device 1000A, with the LATCH structure 300A in a non-use state (alternatively referred to as a stowed state). FIG. 31 illustrates a rear view of the carrier device 1000A shown in FIG. 30. FIG. 32 illustrates a front perspective view of the carrier device 1000A.

The tenth embodiment is similar to the concept of the ninth embodiment, and the following mainly describes the differences between this embodiment and the ninth embodiment. The body 100A includes a receiving space. The receiving space may include two separate extensions 14. The extensions 14 extend from the bottom surface to the top surface of the body 100A. The extensions may be a hollow channel formed in the interior of the body or a semi-open channel formed in the rear surface of the body 100A, and have a top opening and a bottom opening. In addition, two locking mechanisms 33 may be disposed in the two extensions 14, respectively, for example, the two locking mechanisms 33 are higher than the bottom surface of the body 100A. As described in the ninth embodiment, the locking mechanism 33 is, for example, an A-lock. The LATCH structure 300A includes a webbing 32, two ends of the webbing 32 enter the two extensions 14 from the top openings of the two extensions 14, respectively, and downwardly pass through the corresponding locking mechanisms 33 before being connected to the two connecting members 31.

As described in the ninth embodiment, when the extension is a semi-open channel, a guiding structure (for example, similar to the guiding structure 131 in FIG. 26) can be provided on the extension such that the webbing 32 can be maintained in the extension to avoid falling off. Of course, the guiding structure may not be provided.

When the LATCH structure 300A is in the use state, the locking mechanism 33 is unlocked, the two connecting members 31 are pulled out from the extensions 14, and then the two connecting members 31 are connected to two connecting points of the ISOFIX structure of the vehicle seat. The middle portion 323 of the webbing 32 is then pulled, reducing the length of the webbing 32 located between the locking mechanism 33 and the connecting member 31 and tensioning the webbing 32, and the webbing 32 is locked by the locking mechanism 33 to prevent the portion of the webbing 32 located between the locking mechanism 33 and the connecting member 21 from becoming lengthened and loosened. The middle portion 323 of the webbing 32 may be secured around the headrest part of the vehicle seat. When the vehicle is subjected to an impact, the body 100A can be prevented from twisting or rolling due to fixation at the headrest end of the vehicle seat and fixation at the two connecting points of the ISOFIX structure.

When the LATCH structure 300A is in the non-use state, the connecting member 31 is separated from the ISOFIX structure of the vehicle seat. At this time, the connecting member 31 can be received into the extension 14 through the bottom opening of the extension 14 by pulling the middle portion 323 of the webbing.

### Eleventh embodiment

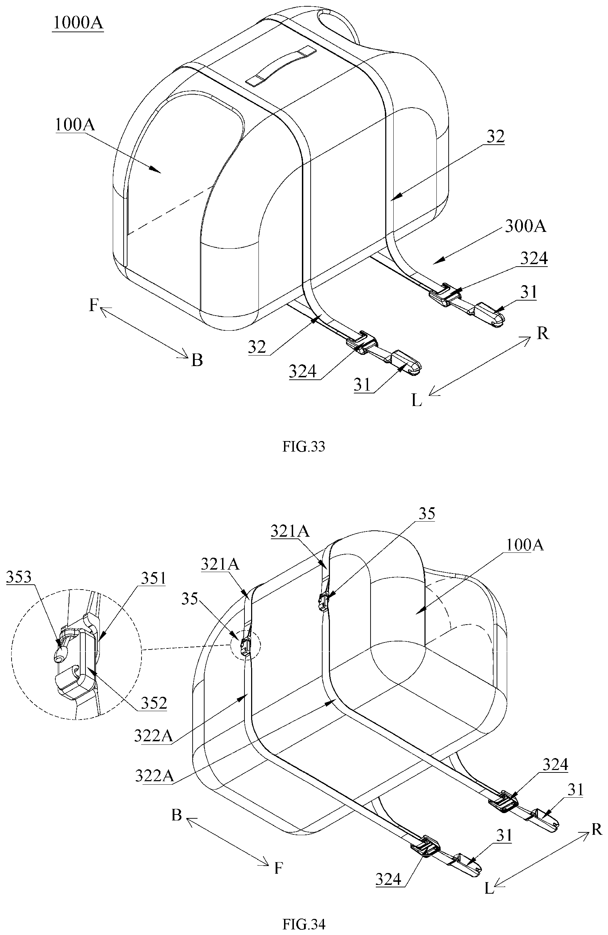

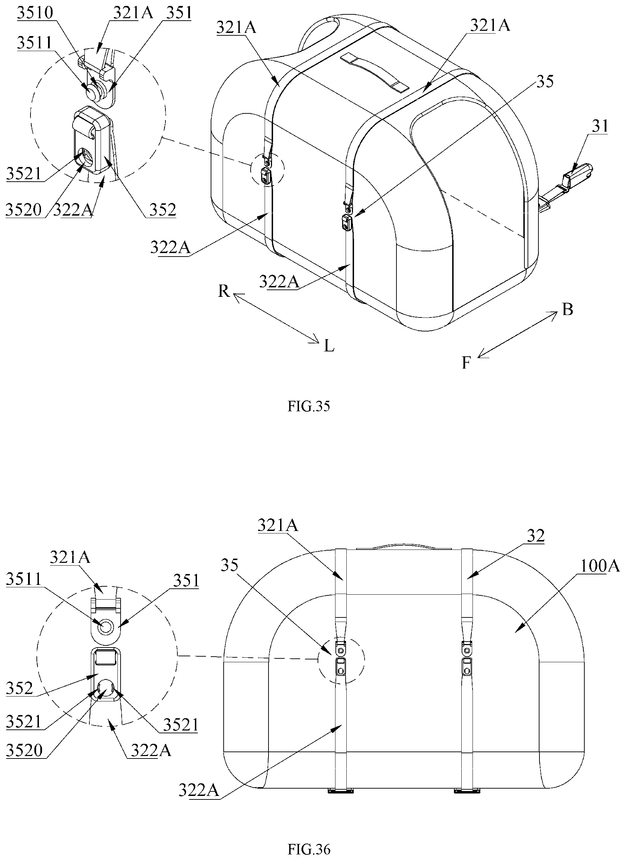

FIG. 33 illustrates a rear perspective view of a carrier device 1000A, such as an animal carrier device or other types of carrier devices, according to an eleventh embodiment. FIG. 34 illustrates a front and bottom view of the carrier device 1000A, with a male buckle 351 and a female buckle 352 of a magnetic buckle mechanism 35 connected to each other. FIG. 35 illustrates a rear and bottom view of the carrier device 1000A, with the male buckle 351 and the female buckle 352 of the magnetic buckle mechanism 35 separated from each other. FIG. 36 illustrates a front view of the carrier device 1000A shown in FIG. 35.

The carrier device 1000A includes a body 100A. When the carrier device 1000A is an animal carrier device, the body 100A has a carrying space for accommodating an animal. The body 100A is secured to an ISOFIX structure of the vehicle seat through a LATCH structure 300A. The LATCH structure 300A includes at least one connecting member 31, each of which is engageable with the ISOFIX structure on the vehicle seat. The LATCH structure 300A further includes at least one webbing 32. The at least one connecting member 31 is connected to the body 100A through the at least one webbing 32. The LATCH structure 300A in the figures includes two connecting members 31 and two webbings 32. The two webbings 32 are nested on the body 100A such that the LATCH structure 300A can be separated from the body 100A.

A magnetic buckle mechanism 35 is provided on the webbing 32. More specifically, the webbing 32 includes a first webbing segment 321 and a second webbing segment 322. The first webbing segment 321 and the second webbing segment 322 define an annular structure nested on the body 100A. One end of the first webbing segment 321 is position-adjustably connected to the second webbing segment 322A by an adjuster 324, and one end of the second webbing segment 322 is connected to the connecting member 31. The adjuster 324 is located between the rear surface of the body 100A and the connecting member 31. Another end of the first webbing segment 321 and another end of the second webbing segment 322 are detachably connected by the magnetic buckle mechanism 35.

The magnetic buckle mechanism 35 includes, for example, a male buckle 351 and a female buckle 352. The male buckle 351 is connected to one of the first webbing segment 321 and the second webbing segment 322, and the female buckle 352 is connected to the other of the first webbing segment 321 and the second webbing segment 322. The male buckle 351 has an outwardly protruding structure 3511, and the female buckle 352 includes a cavity 3520 configured for engaging with the outwardly protruding structure 3511 of the male buckle 351. The outwardly protruding structure 3511 is provided with a groove 3510, and the female buckle 352 further includes a locking mechanism 3521. The locking mechanism 3521 can be engaged with the groove 3510 in the cavity 3520. The grooves 3510 may be of a partially or fully annular structure.

The female buckle 352 is further provided with a releasing band 353 operably connected to the locking mechanism 3521. Specifically, when the releasing band 353 is pulled, the locking mechanism 3521 is driven to be disengaged from the groove 3510 of the male buckle 351 so that the male buckle 351 and the female buckle 352 can be further separated from each other. The locking mechanism 3521 may include a magnetic device, and the male buckle 351 (for example, the outwardly protruding structure 3511) may be provided with a magnetic device. The engagement between the male buckle 351 and the female buckle 352 is further enhanced by a mutual attraction between the magnetic devices of the male buckle 351 and the locking mechanism 3521.

When the male buckle 351 and the female buckle 352 of the magnetic buckle mechanism 35 are engaged with each other, the webbing 22 surrounds the body 100A, and the magnetic buckle mechanism 35 is located on the front surface of the body 100A. For example, the first webbing segment 321 of the webbing 22 extends from the top surface to the rear surface of the body 100A, and the second webbing segment 322 extends from the bottom surface to the rear surface of the body 100A. When the male buckle 351 and the female buckle 352 of the magnetic buckle mechanism 35 are separated from each other, the body 100A and the LATCH structure 300A can be easily separated from each other.

### Twelfth embodiment

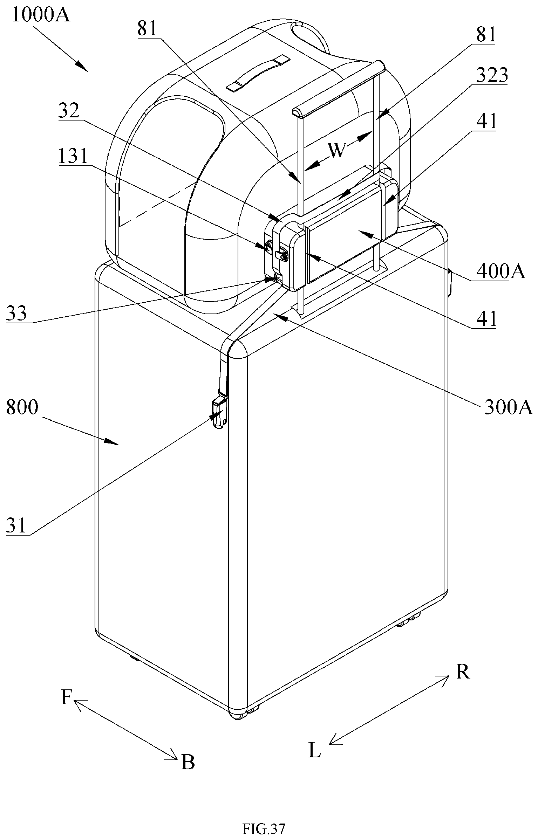

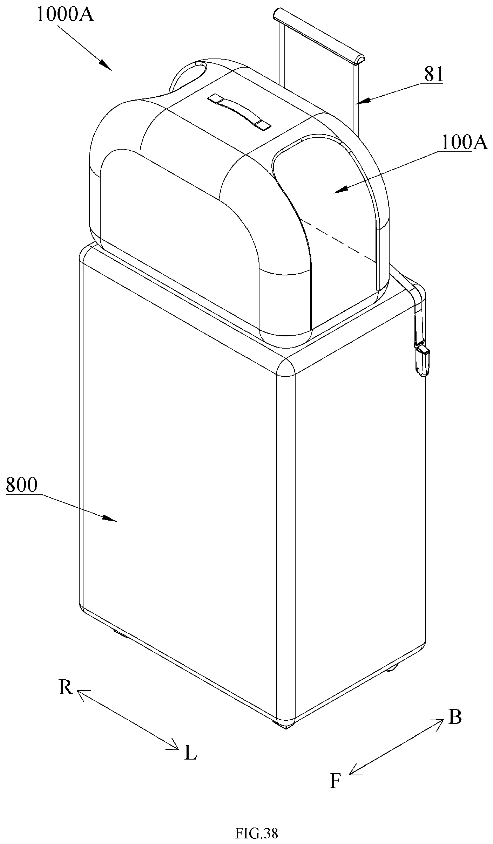

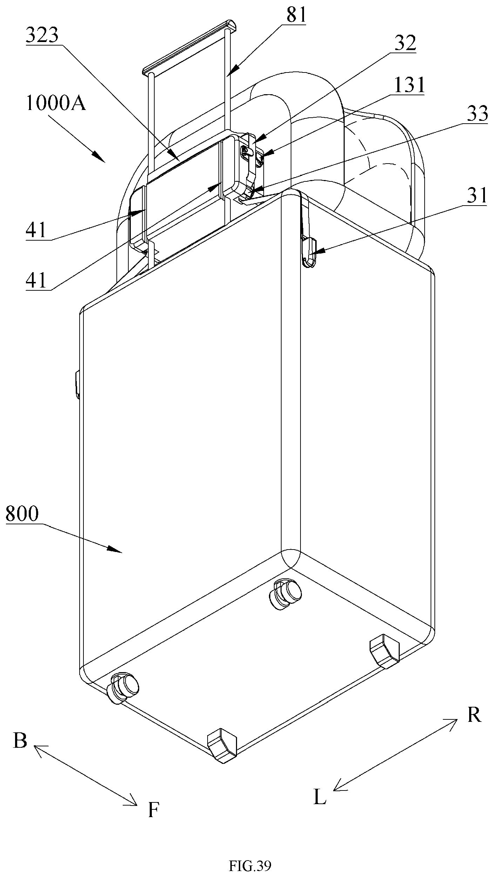

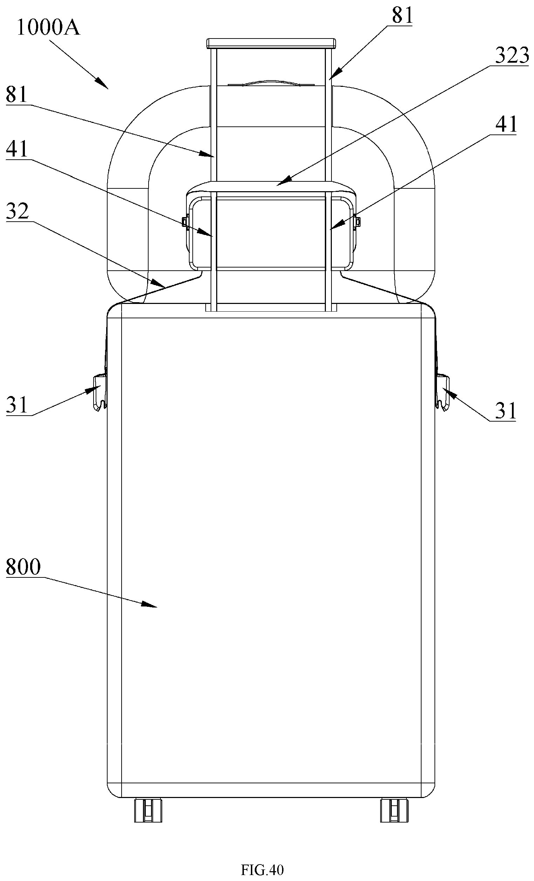

FIG. 37 illustrates a rear top view of a carrier device 1000A, such as an animal carrier device or other types of carrier devices, according to a twelfth embodiment. FIG. 38 illustrates a front and top view of the carrier device 1000A. FIG. 39 illustrates a rear and bottom view of the carrier device 1000A. FIG. 40 illustrates a rear view of the carrier device 1000A.

The carrier device 1000A includes a body 100A. When the carrier device 1000A is an animal carrier device, the body 100A has a carrying space for accommodating an animal. One side of the body 100A is provided with a fixing device 400 which may be integrally formed with the body 100A or may be separate type. The fixing device has a plurality of engaging grooves 41. The engaging grooves 41 are vertically provided on an outer side surface of the fixing device 400, and engageable with lifting rods 81 of the suitcase 800.

The interior of the engaging groove 41 is further provided with an engaging structure (not shown). The engaging structure is adapted to the lifting rods 81 of different thicknesses and/or to the lifting rods 81 of different widths W. The engaging structure is engaged with the lifting rods 81, so that the fixing device 400 can be prevented from disengaging from the lifting rods 81. The body 100A can be securely placed above the suitcase 800 through a firm connection between the fixing device 400 and the lifting rods 81 of the suitcase 800, thereby effectively reducing shaking of the body 100A and preventing the body 100A from being detached from the suitcase 800.

The carrier device 1000A further includes a LATCH structure 300A. The configuration of the LATCH structure 300A and the connecting method between the LATCH structure 300A and the body 100A can refer to the LATCH structure 300A and its connecting method with the body 100A in the fifth to tenth embodiments.

In this embodiment, the LATCH structure 300A is connected to the fixing device 400. The connection method between the two can refer to the connection method between the LATCH structure 300A and the body 100A in the ninth embodiment. Specifically, the LATCH structure 300A includes a webbing 32 and two connecting members 31. A guiding structure 131 and a locking mechanism 33 may be mounted to the fixing device 400. The two ends of the webbing 32 pass through the corresponding guiding structures 131 and locking mechanisms 33, respectively, before being connected to two connecting members 31. The connecting members 31 can be connected to two connecting points of the ISOFIX structure on the vehicle seat. The middle portion 323 of the webbing 32 is available for lifting by a user.

In addition, when the carrier device 1000A is secured to the vehicle seat, in addition to being connected to the ISOFIX through the connecting members 31, the carrier device 1000A can also be secured to the headrest part of the vehicle seat through the middle portion 323 of the webbing 32, thereby increasing the stability of the body 100A secured to the vehicle seat. When the carrier device 1000A is secured to the suitcase 800, the middle portion 323 of the webbing 32 may pass around the lifting rods 81.

### Thirteenth embodiment

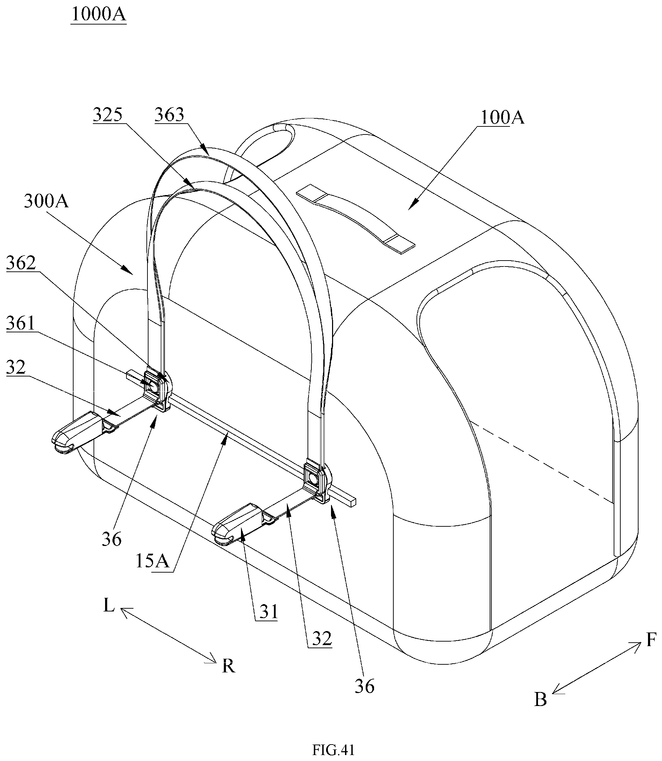

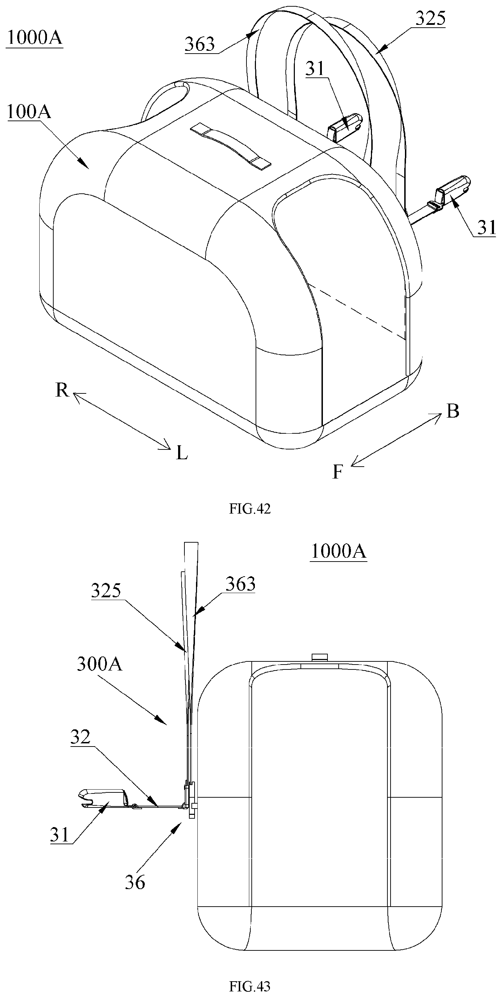

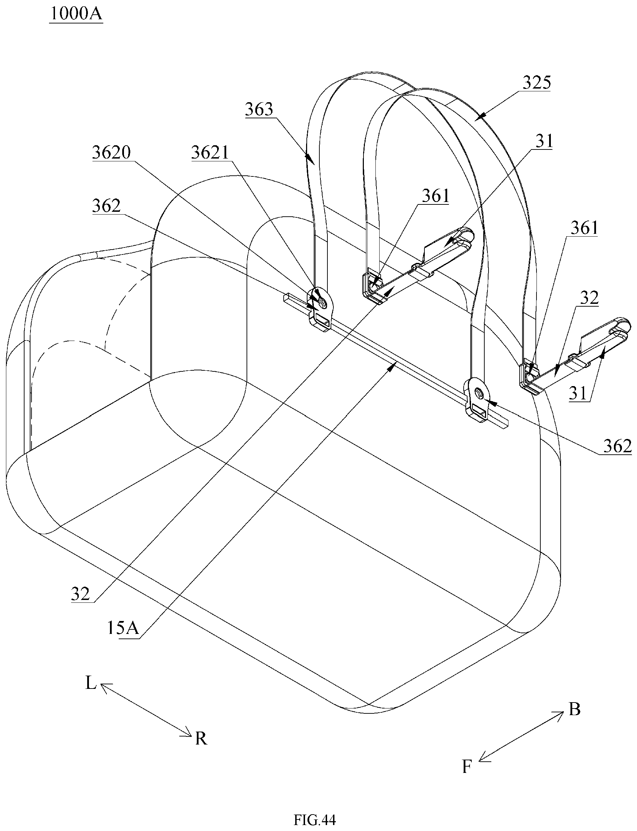

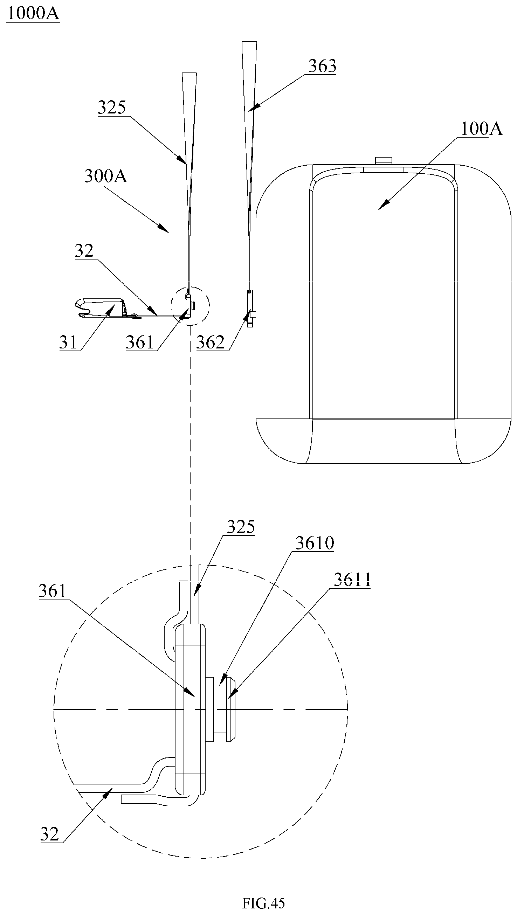

FIG. 41 illustrates a rear and top view of a carrier device 1000A, such as an animal carrier device or other types of carrier devices, according to a thirteenth embodiment, with a male buckle 361 and a female buckle 362 of a magnetic buckle mechanism 36 connected to each other. FIG. 42 illustrates a front and top view of the carrier device 1000A. FIG. 43 illustrates a side view of the carrier device 1000A, with the male buckle 361 and the female buckle 362 of the magnetic buckle mechanism 36 engaged with each other. FIG. 44 illustrates a rear and bottom view of the carrier device 1000A, with the male buckle 361 and the female buckle 362 of the magnetic buckle mechanism 36 separated from each other. FIG. 45 illustrates another side view of the carrier device 1000A, with the male buckle 361 and the female buckle 362 of the magnetic buckle mechanism 36 separated from each other.

The carrier device 1000A includes a body 100A. When the carrier device 1000A is an animal carrier device, the body 100A has a carrying space for accommodating an animal. The carrier device 1000A also includes a LATCH structure 300A that is connected and secured to an ISOFIX structure of the vehicle seat. For example, the LATCH structure 300A includes at least one connecting member 31, each of which may be connected to a connecting point of an ISOFIX structure on the vehicle seat. The body 100A and the LATCH structure 300A are quickly connected to or separated from each other via the magnetic buckle mechanism 36, so that the operation is convenient. The magnetic buckle mechanism 36 includes a male buckle 361 and a female buckle 362. One of the male buckle 361 and the female buckle 362 is provided on the outer side surface of the body 100A, and the other of the male buckle 361 and the female buckle 362 is provided on the LATCH structure 300A.

One or more magnetic buckle mechanisms 36 may be provided between the body 100A and the LATCH structure 300A. If there is no conflict, a configuration of the male buckle 361 and the female buckle 362 of the magnetic buckle mechanism 36 can refer to the configuration of the male buckle 351 and the female buckle 352 of the magnetic buckle mechanism 35 in the thirteenth embodiment.

Specifically, the male buckle 361 is provided with an outwardly protruding structure 3611, and the female buckle 362 includes a cavity 3620 configured for engaging with the outwardly protruding structure 3611 of the male buckle 361. The outwardly protruding structure 3611 is provided with a groove 3610. The female buckle 362 further includes a locking mechanism 3621 which can be engaged with the groove 3610 in the cavity 3620. The groove 3610 may be of a partially or fully annular structure. The female buckle 362 is further provided with a releasing band 363 operably connected to the locking mechanism 3621. Specifically, when the releasing band 363 is pulled, the locking mechanism 3621 is driven to be disengaged from the groove 3610 of the male buckle 361 so that the male buckle 361 and the female buckle 362 can be further separated from each other. The two female buckles 362 are connected, for example, to two ends of the same releasing band 363, respectively, so that the two magnetic buckles mechanism 36 can be simultaneously unlocked when the releasing band 363 is pulled.

The locking mechanism 3621 may include a magnetic device, and the male buckle 361 (for example, the outwardly protruding structure 3611) may be provided with a magnetic device. The engagement of the male buckle 361 and the female buckle 362 is further enhanced by a mutual attraction between the magnetic devices of the male buckle 361 and the locking mechanism 3621.

In this embodiment, two magnetic buckles mechanism 36 are provided between the body 100A and the LATCH structure 300A. The two female buckles 362 are provided on the outer side surface (for example, the rear surface) of the body 100A, and the two male buckles 361 are provided on the LATCH structure 300A. The LATCH structure 300A includes two connecting members 31. The two connecting members 31 are connected to the two male buckles 361 by two webbings 32, respectively. In some embodiments, the two male buckles 361 may be connected by a connecting band 325.

The two female buckles 362 are disposed in parallel and opposite to each other on the outer side surface of the body 100A, and away from the bottom surface of the body 100A. In some embodiments, the outer side surface of the body 100A may be further provided with a chute or rail 15A. The chute or rail 15A may be located on the same surface of the body 100A as the two female buckles 362. The two female buckles 362 may slide along the chute or rail 15 to adjust the relative position therebetween.

When the carrier device 1000A is in the use state, the LATCH structure 300A is connected to the body 100A through the magnetic buckle mechanism 36, and connected to two connecting points of the ISOFIX structure of the vehicle seat through two connecting members 31, respectively. A distance between the two female buckles 362 is, for example, greater than or equal to a distance between the two connecting points of the ISOFIX structure of the vehicle seat.

In addition, when the carrier device 1000A is in the use state, the connecting band 325 can be secured around the headrest part of the vehicle seat. When the vehicle is subjected to an impact, the body 100A can be prevented from twisting or rolling due to fixation at the headrest end of the vehicle seat and fixation at the two connecting points of the ISOFIX structure.

### Fourteenth embodiment

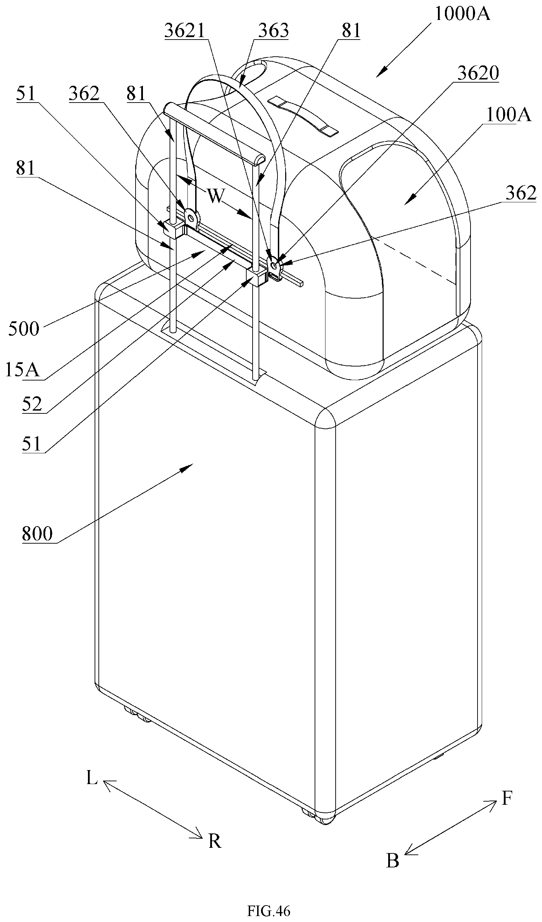

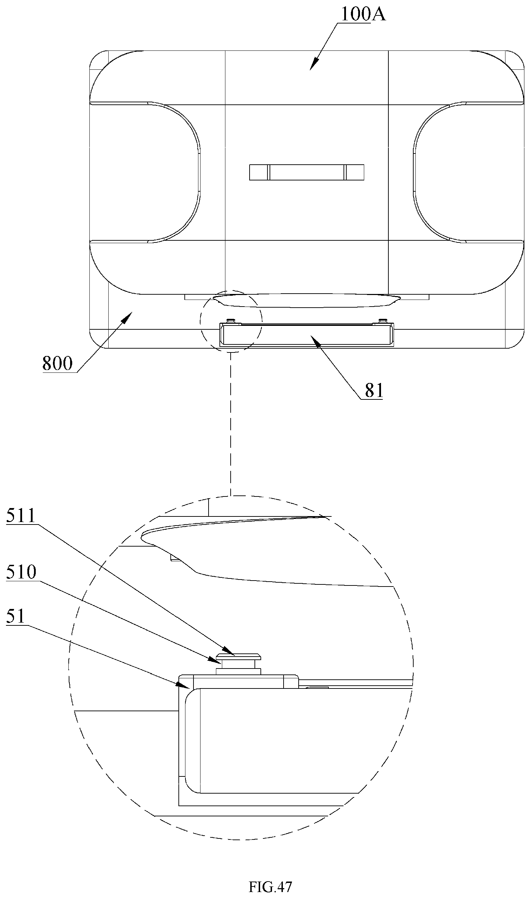

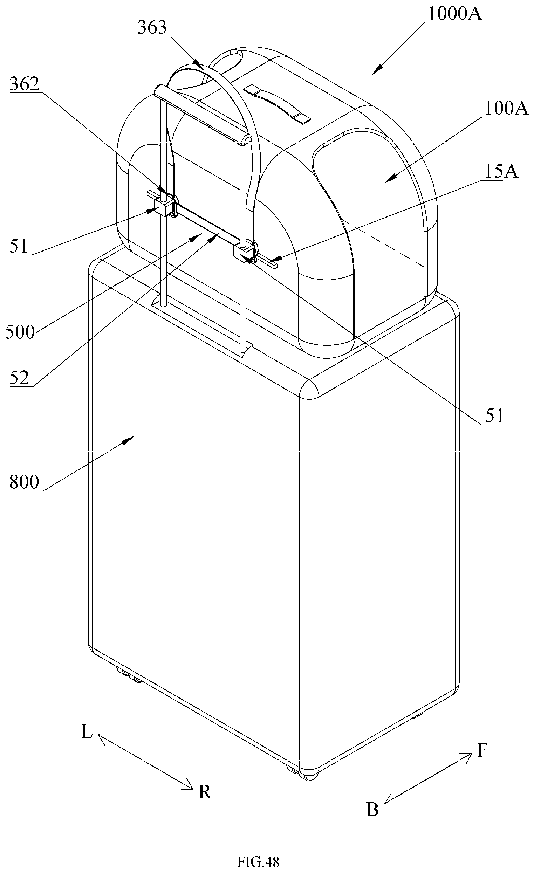

FIG. 46 illustrates a perspective view of a body 100A of a carrier device 1000A, such as an animal carrier device or other types of carrier devices, mounted to a suitcase 800 but not connected to the suitcase 800, according to a fourteenth embodiment. FIG. 47 illustrates a top view of the body 100A and suitcase 800 shown in FIG. 46. FIG. 48 illustrates a perspective view of the body 100A connected to the suitcase 800.

If there is no conflict, a configuration of the body 100A in this embodiment can refer to the description in the thirteenth embodiment. More specifically, when the carrier device 1000A is an animal carrier device, the body 100A has a carrying space for accommodating an animal. The outer side surface of the body 100A is provided, for example, with two buckles. Two buckles are for example, female buckles 362, which are slidable along the chute or rail 15 to adjust the relative positions therebetween. The specific configuration of the female buckle 362 will not be described in detail again.

The present embodiment also provides a magnetic buckle adjusting mechanism 500 including two buckles 51 and an adjusting mechanism 52.

The two buckles 51 are, for example, male buckles configured for engaging with the female buckles 362. The male buckle may have an outwardly protruding structure 511 configured for engaging a cavity 3620 of the female buckle 362. The outwardly protruding structure 511 is provided with a groove 510, and a locking mechanism 3621 of the female buckle 362 can be engaged with the groove 510 in the cavity 3620. The female buckle 362 is further provided with a releasing band 363 operably connected to the locking mechanism 3621. The groove 510 may be of a partially or fully annular structure. The locking mechanism 3621 may include a magnetic device, and the male buckle (for example, the outwardly protruding structure 511) may be provided with a magnetic device. The engagement of the male buckle 51 and the female buckle 362 is further enhanced by a mutual attraction between the magnetic devices of the male buckle and the locking mechanism 3621. Of course, in some alternative embodiments, the buckle 51 may be a female buckle and the buckle on the body 100A may be a male buckle.

The two buckles 51 are connected by an adjusting mechanism 52. Through the adjusting mechanism 52, a relative distance between the two buckles 51 can be further adjusted. The buckle adjusting mechanism 500 (adjusting mechanism 52 or two buckles 51) can be connected (for example, detachably connected) to two parallel rods of the lifting rods 81 of the suitcase 800. By adjusting the relative distance between the two buckles 51 by means of the adjusting mechanism 52, it is possible to adapt the distance between the two buckles 51 to the width W of the lifting rods 81 of the different suitcases.

As described above with reference to the thirteenth embodiment, the buckle 51 of the magnetic buckle adjusting mechanism 500 can be engaged with the buckle of the body 100A of the carrier device 1000A, and the engagement of the two can be unlocked by the releasing band 363, so that the body 100A can be stably disposed on the suitcase 800 or can be quickly separated from the suitcase 800.

### Fifteenth embodiment

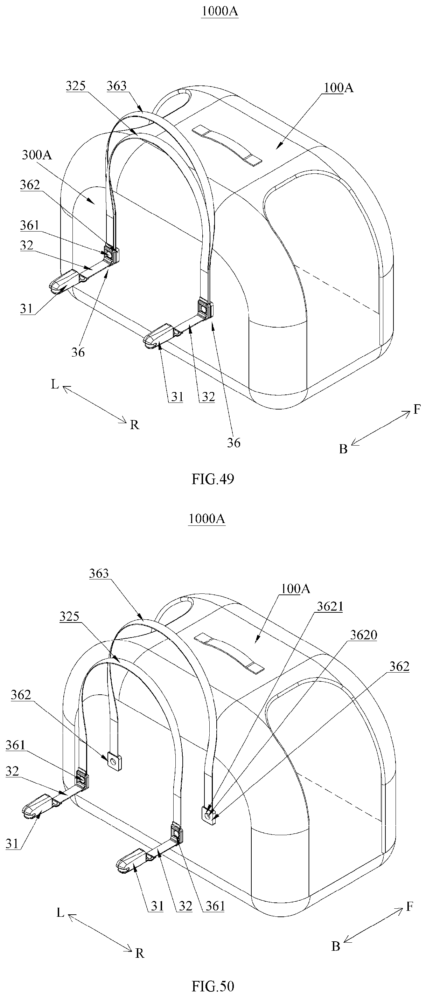

FIG. 49 illustrates a rear perspective view of a carrier device 1000A, such as an animal carrier device or other types of carrier devices, according to a fifteenth embodiment, with a male buckle 361 and a female buckle 362 of a magnetic buckle mechanism 36 engaged with each other. FIG. 50 illustrates a rear perspective view of the carrier device 1000A, with the male buckle 361 and the female buckle 362 of the magnetic buckle mechanism 36 separated from each other.

The carrier device 1000A provided in the fifteenth embodiment is a variant of the carrier device 1000A provided in the thirteenth embodiment. If there is no conflict, a configuration of the carrier device 1000A provided in the fifteenth embodiment can refer to the configuration of the carrier device 1000A provided in the thirteenth embodiment. The main difference between the fifteenth embodiment and the thirteenth embodiment is that the fifteenth embodiment omits the chute or the slide rail 15A in the thirteenth embodiment, and the two female buckles 362 can be position-fixedly connected to the outer side surface of the body 100A.

### Sixteenth embodiment

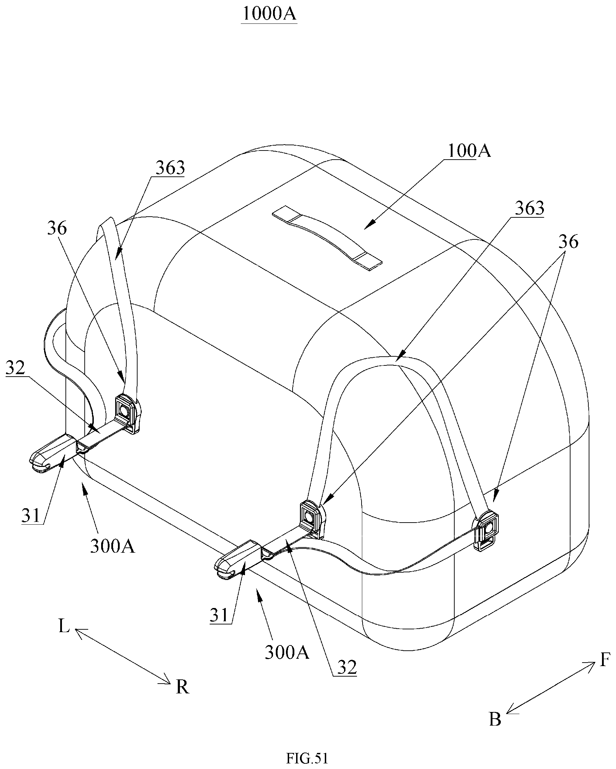

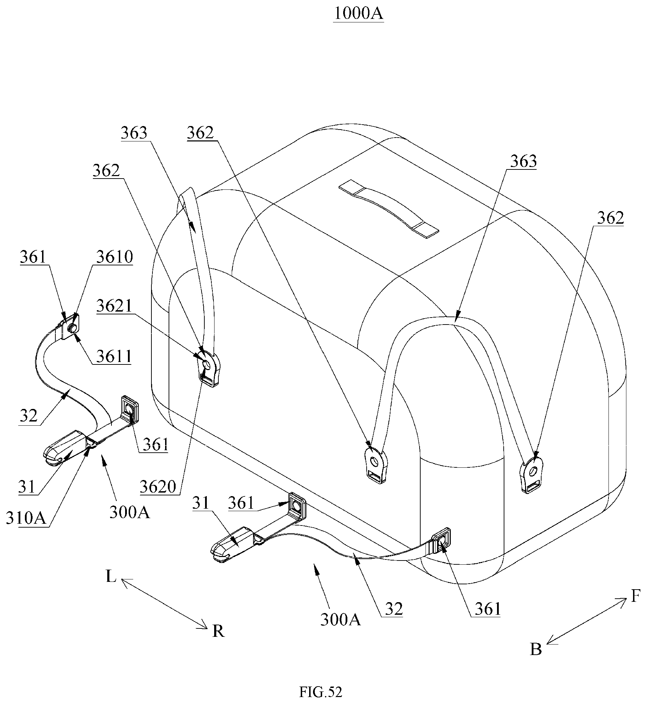

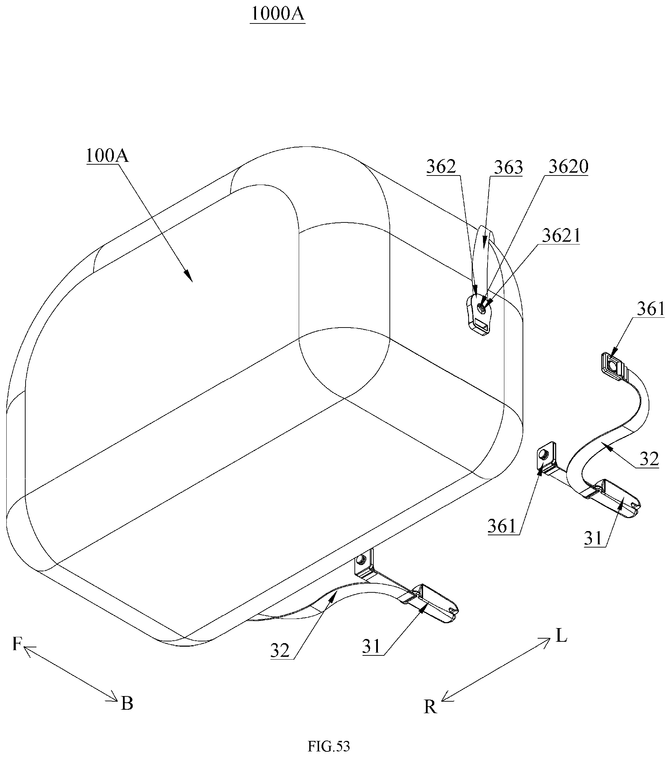

FIG. 51 illustrates a rear perspective view of a carrier device 1000A, such as an animal carrier device or other types of carrier devices, according to a sixteenth embodiment, with a male buckle 361 and a female buckle 362 of a magnetic buckle mechanism 36 connected to each other. FIG. 52 illustrates a rear perspective view of the carrier device 1000A, with the male buckle 361 and the female buckle 362 of the magnetic buckle mechanism 36 separated from each other. FIG. 53 illustrates a front perspective view of the carrier device 1000A, with the male buckle 361 and the female buckle 362 of the magnetic buckle mechanism 36 separated from each other.

The carrier device 1000A provided in the sixteenth embodiment is a variant of the carrier device 1000A provided in the fifteenth embodiment. If there is no conflict, a configuration of the carrier device 1000A provided in the sixteenth embodiment can refer to the configuration of the carrier device 1000A provided in the fifteenth embodiment. The following mainly illustrates the differences between the sixteenth embodiment and the fifteenth embodiment.

In this embodiment, the body 100A and the LATCH structure 300A of the carrier device 1000A are connected by four magnetic buckle mechanisms 36. The four magnetic buckle mechanisms 36 are located away from the bottom surface of the body 100A. In addition, the four magnetic buckle mechanisms 36 are disposed on a plurality of outer side surfaces of the body 100A. For example, two magnetic buckle mechanisms 36 are disposed on the rear surface of the body 100A, and two magnetic buckle mechanisms 36 are respectively disposed on the left side surface and the right side surface of the body 100A opposite to each other.

The female buckles 362 of the magnetic buckle mechanisms 36 are provided, for example, on the body 100A, and the left and right female buckles 362 can be connected to the adjacent female buckles 362 through the releasing bands 363, respectively. The male buckles 361 of the magnetic buckle mechanisms 36 are connected in groups of two by webbings 32. Each of the webbings 32 is connected to a connecting member 31. A position of the connecting member 31 on the webbing 32 is adjustable. For example, the connecting member 31 includes a connecting hole 310 through which the webbing 32 passes so that the connecting member 31 can slide along the webbing 32.

Of course, in other embodiments, the male buckle 361 and the female buckle 362 may be positionally interchangeable between the body 100A and the LATCH structure 300A.

According to the present embodiment, the magnetic buckle mechanisms 36 are provided on different outer side surfaces of the body 100A of the carrier device 1000A, so that the stability of the connection between the body 100A and the ISOFIX structure of the vehicle seat is further increased, and the body 100A is prevented from rolling when the vehicle is subjected to an impact.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as fallen in the scope of the present application.

The above-described embodiments are only several implementations of the present application, and the descriptions are relatively specific and detailed, but they should not be construed as limiting the scope of the present application. It should be understood by those of ordinary skill in the art that various variants and improvements can be made without departing from the concept of the present application, and all fall within the protection scope of the present application. Therefore, the patent protection of the present application shall be defined by the appended claims.

## Claims

1. A box fixing structure, comprising:
a box;
a restraining strap passing through the box, wherein the restraining strap comprises an adjusting end and at least one connecting end, the adjusting end and the at least one connecting end extend from a rear side plate of the box toward an outside of the box, the at least one connecting end leaves from the rear side plate at a position with a predetermined height from a bottom plate of the box, and the at least one connecting end is provided with an anchor configured to be connected to a vehicle seat; and
an adjuster attached to the box, wherein the adjusting end passes through the adjuster, and the adjuster is capable of locking the adjusting end, so that a length of the restraining strap between the anchor and the adjuster is enabled to be adjusted.

2. The box fixing structure according to claim 1, wherein the restraining strap comprises two connecting ends, the respective anchors of the two connecting ends are adapted to be detachably connected to two sockets provided between a seating part and a backrest part of the vehicle seat, respectively, such that when the anchors are engaged with the sockets, the at least one connecting end extends rearwardly and downwardly from the rear side plate.

3. The box fixing structure according to claim 1, wherein the restraining strap extends to the rear side plate along the bottom plate of the box, then extends upwardly along the rear side plate, and then extends from the predetermined height of the rear side plate toward the outside of the box.

4. The box fixing structure according to claim 3, wherein:
the rear side plate of the box is provided with a rigid member, the rigid member having a supporting part higher than the bottom plate of the box to support the connecting end at the predetermined height; and
the at least one connecting end of the restraining strap curves around the supporting part and then extends toward the outside of the box.

5. The box fixing structure according to claim 4, wherein,
the rigid member is provided on an exterior of the rear side plate of the box, and the restraining strap passes between the rigid member and the rear side plate to extend upwardly along the rear side plate; or
the rigid member has a hollow first channel, and the at least one connecting end of the restraining strap passes through the first channel to extend upwardly along the rear side plate.

6. The box fixing structure according to claim 1, wherein the box is provided with a guiding structure configured to guide and support the restraining strap; the restraining strap comprises two connecting ends; the two connecting ends extend from a front side plate of the carrier toward a left side plate and a right side plate of the carrier, respectively, then extend rearwardly through the guiding structure along the left side plate and the right side plate, respectively, and extend from the predetermined height of the box toward the outside of the box; and the guiding structure defines the predetermined height from which the two connecting ends protrude out of the box.

7. The box fixing structure according to claim 6, wherein,
the guiding structure comprises a slot-type structure provided on the side plates of the box and two stoppers spaced apart from each other on the rear side plate of the box, and the two connecting ends each extend along the slot-type structure, curve around the respective stoppers, and then protrude from the rear side plate toward the outside of the box; or
the guiding structure comprises two annular engaging members provided on the rear side plate, the two annular engaging members are spaced apart from each other on the rear side plate of the box, and the two connecting ends each curve around the respective engaging members and then protrude from the rear side plate toward the outside of the box.

8. The box fixing structure according to claim 1, wherein the adjuster is attached to the bottom plate or a top plate of the box, and the adjusting end passes through the adjuster and extends to a front of the box.

9. The box fixing structure according to claim 1, wherein the position at which the at least one connecting end leaves from the box is higher than one half of a height of the box.

10. A carrier device, comprising:
a body having a carrying space, wherein a rod is provided at a side of a bottom part of the body; and
a connecting base, wherein an engaging structure is provided at a side of the connecting base and engaged with the rod, and at least one connecting member and at least one receiving space are provided at another side of the connecting base opposite to the side, the at least one connecting member is pivotally connected to the connecting base to be movable between a use position and a non-use position, and the at least one connecting member is configured to be connected to at least one connecting point of a vehicle seat;
wherein when the at least one connecting member is in the non-use position, the at least one connecting member is received in the at least one receiving space;
wherein the engaging structure is detachably engaged with the rod such that the connecting base is separable from the body.

11. The carrier device according to claim 10, wherein the connecting base is pivotally connected to the bottom part of the body such that the connecting base has a use position and a stowed position; when the connecting base is in the stowed position, the connecting base is pivoted to a position in contact with a rear or bottom surface of the body; and when the connecting base is in the use position, the connecting base is pivoted to a horizontal attitude.

12. The carrier device according to claim 10, wherein,
when the at least one connecting member is separately horizontally rotated in a common direction, the at least one connecting member rotates from the non-use position to the use position; or
when the at least one connecting member is separately horizontally rotated in opposing directions, the at least one connecting member rotates from the use position to the non-use position.

13. The carrier device according to claim 10, wherein the bottom part of the body is provided with a receiving cavity, and when the connection base is in the stowed position, the connecting base is received in the receiving cavity and locked in the stowed position.

14. A carrier device, comprising:
a body having a carrying space, wherein at least one guiding structure and at least one locking mechanism are provided on a side surface of the body;
at least one connecting member configured to be connected to at least one connecting point of a vehicle seat; and
at least one webbing passing through the corresponding guiding structure and locking mechanism and connected to the corresponding connecting member, wherein the at least one connecting member is connected to the body by the at least one webbing.

15. The carrier device according to claim 14, wherein,
at least two rails extending vertically are provided on a rear surface of the body, the carrier device further comprises a connecting element slidably engaged with the rails, and the rails are provided with an engaging device configured to lock a position of the connecting element on the rails; and
an end of each of the at least one webbing is connected to the connecting element, such that a height of the connecting element is adjusted by sliding the connecting element.

16. The carrier device according to claim 15, wherein a first end of the webbing is connected to the connecting element; a second end of the webbing extends through the locking mechanism, passes by a bottom part of the body, and extends forwardly; and the connecting member is slidably fitted onto the webbing, allowing a length of a portion of the webbing located between the first end and the locking mechanism to be shortened by pulling the second end of the webbing.

17. The carrier device according to claim 14, wherein the locking mechanism is a unidirectional locking mechanism, and when the locking mechanism is in a locked state, the locking mechanism locks an unidirectional sliding of the webbing, allowing a length of a portion of the webbing located between the connecting member and the locking mechanism to be shortened by pulling the webbing, and not allowing the length of the portion of the webbing located between the connecting member and the locking mechanism to be lengthened;
both the at least one guiding structure and the at least one locking mechanism are provided on a rear surface of the body.

18. The carrier device according to claim 14, wherein the at least one locking mechanism comprises two locking mechanisms; an end of the webbing extends through one of the two locking mechanisms and is connected to one of the at least one connecting member; another end of the webbing extends through another of the two locking mechanisms and is connected to another of the at least one connecting member, allowing a length of a portion of the webbing located between the first end and the locking mechanism to be shortened by pulling a portion of the webbing between two ends thereof.

19. The carrier device according to any one of claims 14 to 18, wherein,
at least one extension extending vertically is provided at a rear surface of the body, the extension is a hollow channel or a semi-open channel, and a lower end of the extension is formed with a receiving space configured to receive the connecting member;
the webbing extends through the extension, and the connecting member has a use position in which the connecting member protrudes out of the extension and a stowed position in which the connecting member is received in the receiving space of the extension.

20. The carrier device according to claim 14, wherein the webbing comprises a first webbing segment and a second webbing segment, and the first webbing segment and the second webbing segment are detachably connected by a buckle to form an annular structure nestable on the body.

21. The carrier device according to claim 14, wherein a rear surface of the body is provided with a chute or a rail extending in a horizontal direction; the chute or rail is provided with a second buckle slidable in an extending direction of the chute or rail; and the webbing is connected to the second buckle, allowing a position of the connecting member to be adjusted by sliding the second buckle.

22. The carrier device according to claim 21, wherein the webbing is provided with a first buckle detachably connected to the second buckle.

23. The carrier device according to claim 14, wherein each of a rear surface, a left side plate, and a right side plate of the body is provided with a second buckle, and the webbing is provided with a first buckle detachably connected to each second buckle.
